# EUROPÄISCHE PATENTANMELDUNG

(11) **EP 3 772 453 A1**
(43) Veröffentlichungstag der Anmeldung: **10.02.2021**
(21) Anmeldenummer: 20000271.5
(22) Anmeldetag: 03.08.2020
(51) Int. Cl.: B62M 9/121, B62M 9/1248, B62M 9/126, B62M 9/16

(54) **FAHRRAD-SCHALTWERK, INSBESONDERE MIT FEDER-DÄMPFER-BAUGRUPPE**

(30) Priorität: 08.08.2019 DE 102019005579; 24.07.2020 DE 102020209370
(71) Anmelder: SRAM Deutschland GmbH, 97424 Schweinfurt (DE)
(72) Erfinder: Braedt, Henrik, 97456 Dittelbrunn/OT Hambach (DE); Harcke, Tobias, 97456 Dittelbrunn (DE)

(57) **Zusammenfassung**

Es wird ein Fahrradumwerfer bereitgestellt, der ein an einem Fahrradrahmen montierbares Basiselement (12), ein mit dem Basiselement (12) beweglich gekoppeltes, eine Aufnahme (17) aufweisendes bewegliches Element (16), eine im beweglichen Element (16) in der Aufnahme um eine Drehachse (A) drehbar gelagerte Drehwelle (50) und eine relativ zum beweglichen Element um die Drehachse (A) drehbare, drehfest an der Drehwelle (50) angekoppelte Kettenführungsbaugruppe (25) aufweist. Eine elastische Kraftspeichereinrichtung (44) ist dafür konfiguriert, auf die Kettenführungsbaugruppe eine Vorspannkraft auszuüben, die diese in eine definierte Drehrichtung relativ zu dem beweglichen Element (16) vorspannt. Nach einem ersten Aspekt wird vorgeschlagen, dass eine direkt oder indirekt zwischen dem beweglichen Element (16) und der Kettenführungsbaugruppe wirksame Dämpfungseinrichtung (38) eine radial innerhalb der ersten elastischen Kraftspeichereinrichtung (44) innerhalb deren axialen Erstreckungsbereichs angeordnete Koppeleinrichtung (60) aufweist, über die die Dämpfungseinrichtung an wenigstens einem von einer in Bezug auf das bewegliche Element stationären Abstützung und der Drehwelle (50) angekoppelt ist. Nach einem zweiten Aspekt wird vorgeschlagen, dass die erste elastische Kraftspeichereinrichtung (44) über die Drehwelle (50) an der Kettenführungsbaugruppe (25) angekoppelt ist, um die Vorspannkraft über die Drehwelle auf die Kettenführungsbaugruppe auszuüben. Nach einem dritten Aspekt wird vorgeschlagen, dass die Drehwelle (50) mittels einer Drehlagerung an einem Deckelelement (19) drehbar gelagert ist, welches zusammen mit der sich durch eine Durchgangsöffnung des Deckelelements erstreckenden Drehwelle (50) die Aufnahme (17) des beweglichen Elements (16) verschließt und am beweglichen Element (16) befestigt ist.

## Beschreibung

### Technischer Hintergrund

Ein Fahrrad kann mit einer Antriebsanordnung, wie z.B. einem Kettenantrieb, ausgestattet sein. Fahrrad-Antriebsanordnungen können verwendet werden, um das Drehmoment von einem Fahrer auf ein hinteres Laufrad zu übertragen, um das Fahrrad anzutreiben. Eine Antriebsanordnung kann zum Beispiel das Drehmoment von einer vorderen Kettenradanordnung über eine Kette auf ein hinteres Kettenrad oder Ritzel, etwa ein Ritzel einer sog. Ritzelkassette oder eines sog. Ritzelpakets, übertragen, um ein hinteres Laufrad anzutreiben. Eine solche Antriebsanordnung kann als Antriebsstrang bezeichnet werden.

Kettenradbaugruppen für Fahrräder können ein oder mehrere einzelne Kettenräder aufweisen. Die vorderen Kettenräder werden allgemein als Kettenblätter bezeichnet. Kettenblätter können mit Hilfe verschiedenartiger Befestigungsvorrichtungen befestigt werden. Ein Kettenblatt kann z.B. mit Kettenblattschrauben befestigt oder direkt an der Kurbel eines Fahrrades montiert werden. Die hinteren Kettenräder werden häufig als Ritzel bezeichnet. Eine Mehrzahl von hinteren Kettenrädern oder Ritzeln kann als Kassette, Ritzelkassette oder Ritzelpaket bezeichnet werden. Eine solche Kassette ist typischerweise so konfiguriert, dass sie an einem Freilaufteil eines hinteren Laufrades befestigt werden kann. Eine Kassette kann z.B. an einem Freilaufkörper eines Hinterrades mit Hilfe einer Keil- und/oder Gewindeverbindung befestigt werden.

Die Ausrichtung einer vorderen Kettenblattgruppe mit einer hinteren Ritzelkassette beeinflusst die Leistung der Kette. Zum Beispiel kann eine vordere Kettenblattbaugruppe ein einziges Kettenblatt aufweisen, welches nach einem bestimmten Ritzel der hinteren Ritzelkassette ausgerichtet ist. Wenn die Kette das einzelne Kettenblatt mit diesem im Wesentlichen ausgerichteten einzelnen hinteren Ritzel verbindet, steht die Kette unter geringer oder keiner seitlichen Belastung. Wenn die Kette jedoch seitlich zu einem anderen Ritzel der Kassette bewegt wird, z.B. durch einen hinteren Umwerfer oder ein hinteres Schaltwerk einer Kettenschaltung des Antriebsstrangs, erfährt die Kette eine gewisse seitliche Belastung. Entsprechende seitliche Belastungen der Kette treten auf, wenn die vordere Kettenblattbaugruppe mehrere Kettenblätter aufweist, zwischen denen die Kette durch einen vorderen Umwerfer oder ein vorderes Schaltwerk der Kettenschaltung bewegt wird.

Für eine gute Leistung einer solchen Kettenschaltung ist die Funktions- und Leistungsfähigkeit des im Fachgebiet auch als hinterer Fahrradderailleur oder hinteres Schaltwerk bezeichneten hinteren Umwerfers von besonderer Bedeutung. Dieser dient nicht nur zum Durchführen von Schaltvorgängen durch Umwerfen der Kette zwischen mehreren benachbarten Ritzeln des Ritzelsatzes des Fahrrads. Eine weitere, ebenfalls sehr wichtige Funktion des Umwerfers ist die Gewährleistung einer ausreichenden Kettenspannung. Ein hinterer Umwerfer hat hierzu regelmäßig den folgenden Aufbau. Es ist ein in Fachgebiet auch als B-Knuckle bezeichnetes Basiselement vorgesehen, mit dem der Umwerfer an dem Fahrrad montiert wird. Ferner gibt es ein im Fachgebiet auch als P-Knuckle bezeichnetes bewegliches Element, welches beweglich an das Basiselement gekoppelt ist, und eine regelmäßig als sog. Kettenkäfig ausgeführte Kettenführung, die an das bewegliche Element zur Rotation bezüglich einer Rotationsachse beweglich gekoppelt ist. Das bewegliche Element ist in seitlicher (axialer) Richtung beweglich, um die Kettenführung zwischen den Ritzeln des Ritzelsatzes zu bewegen, so dass die Kette von einem Ausgangsritzel zu einem Zielritzel überführt werden kann. Die Kettenführung ist durch eine Spannfeder oder dergleichen elastisch in einer Rotationsrichtung vorgespannt, nämlich in Richtung einer Spannung der mittels der Kettenführung geführten Kette des Fahrrads, um die Kette im gespannten Zustand zu halten bzw. den gespannten Zustand nach vorangehendem Zustand der ungenügenden Kettenspannung wiederherzustellen. Diese Rotations- oder Schwenkrichtung wird hier auch als "Kettenspannrichtung" angesprochen. Eine Verdrehung der Kettenführung in dieser Richtung erhöht die Kettenspannung und verringert gleichzeitig die Spannung der auf die Kettenführung wirkenden Spannfeder.

Je nach momentanem Ritzel des Ritzelsatzes, mit dem die Kette zu einem gegebenen Zeitpunkt eingreift, wird die Kettenführung unterschiedliche Schwenkpositionen relativ zum beweglichen Element bezüglich der Rotationsachse einnehmen.

Einwirkungen auf die Kette und die Kettenführung ergeben sich nicht nur aus dem Schalten der Kettenschaltung durch Überführung der Kette zwischen verschiedenen Ritzeln des Ritzelsatzes, sondern auch aus dem Fahrbetrieb selbst. So sind der Umwerfer und die Kette etwa beim Fahren auf unebenem Gelände Schlägen und Erschütterungen ausgesetzt, die auf die Kettenführung in einer zur "Kettenspannrichtung" entgegengesetzten Schwenkrichtung wirken können. Eine Verdrehung der Kettenführung in dieser zur "Kettenspannrichtung" entgegengesetzten Richtung vergrößert die Spannung der auf die Kettenführung wirkenden Spannfeder und führt unmittelbar zu einer Reduzierung der Kettenspannung (etwa wenn eine unmittelbare Einwirkung auf die Kettenführung diese in dieser Richtung verdreht) oder zumindest zu einer erheblichen Gefahr einer nachfolgenden Reduzierung der Kettenspannung unter das notwendige Maß. Negative Folge können Spannungsabfälle der Kette mit unerwünschtem Spiel bzw. "Schlackern" der Kette sein, im Extremfall hin bis zu einem Abspringen der Kette von dem Ritzelsatz.

Um solchen Problemen zu begegnen, sind manche herkömmliche Lösungen mit einer Gegenkrafterzeugungseinrichtung ausgeführt, welche auch als Dämpfer, Dämpfungseinrichtung oder Dämpferbaugruppe angesprochen werden kann und einen Widerstand bereitstellt bezüglich der Rotationsbewegung der Kettenführung. Einige bekannte Lösungen stellen diesen dämpfenden Widerstand nur in der zur "Kettenspannrichtung" entgegengesetzten Drehrichtung der Kettenführung bereit. Hierzu weisen einige dieser bekannten Lösungen jeweils eine Freilaufkupplungseinrichtung und eine Reibeinrichtung auf, welche so zusammenwirken, dass der Widerstand bezüglich einer Rotationsbewegung der Kettenführung in der der "Kettenspannrichtung" entgegengesetzten Drehrichtung bewirkt wird.

Das bewegliche Element und die Kettenführung sind relativ zueinander verdrehbar, stehen aber über die Reibeinrichtung und die auch als Einwegkupplung ansprechbare Freilaufkupplungseinrichtung in reibschlüssiger Drehmitnahmeverbindung, die aufgrund der Einwegkupplungseigenschaft der Einwegkupplung nur für die der "Kettenspannrichtung" entgegengesetzten Drehrichtung wirksam ist, so dass nur in dieser Drehrichtung der Drehung entgegenwirkende Gleitreibung auftritt. In der anderen, einer Rückdrehung der Kettenführung im Sinne eines Spannens der Kette entsprechenden Drehrichtung ist die Kettenführung aufgrund dieser Einwegkupplungseigenschaft von dem bewegbaren Element entkoppelt, so dass dem Spannen der Kette durch Drehung der Kettenführung kein Widerstand oder zumindest kein wesentlicher Widerstand entgegenwirkt.

Es ist festzustellen, dass sich bei hochwertigen Mountainbikes in den letzten Jahren Schaltwerke mit Feder-Dämpfer-Systemen im beweglichen Element (P-Knuckle) durchgesetzt haben. Auch im Cyclocross-Bereich und sogar bei Rennrädern wird diese Technologie inzwischen eingesetzt, um das "Chain Management" zu verbessern. Das Ziel der Verbesserung des Chain Management umfasst die Reduzierung aller unerwünschten Kettenbewegungen, wie z.B. das Aufschlagen der Kette auf der Kettenstrebe, starke Kettenschwingungen während der Fahrt, die zum Abwurf der Kette führen können, oder auch das Durchhängen der Kette im Lasttrum durch das vom Antreiber ausgehende Drehmoment im Freilaufbetrieb der Hinterradnabe.

Auf dem Markt sind unterschiedliche Dämpfersysteme im Einsatz. Das Dämpfermoment ist dabei regelmäßig richtungsabhängig ausgeprägt, so dass es nur bei zusätzlichem, insbesondere dynamischem Kettenzug zur Wirkung kommt, jedoch der die Kette spannenden Rückstellbewegung der Käfigfeder nicht entgegenwirkt.

Wichtige andere Anforderungen und für die Praxis wichtige Eigenschaften einer hinteren Umwerfers, unabhängig davon, ob dieser mit einer Dämpfungseinrichtung ausgeführt ist oder nicht, betreffen dessen Abmessungen, Toleranzketten, eine eine definierte Beweglichkeit des Kettenkäfigs relativ zum beweglichen Element (P-Knuckle) erreichende Drehlagerung des Kettenkäfigs, Dichtigkeit, Robustheit, Betriebssicherheit sowie Montage und Wartung.

Hintergrund der vorliegenden Erfindung und ihrer verschiedenen Aspekte sind speziell auch die folgenden bei bekannten Lösungen gesehenen Probleme:
1. Bauraum
   Das Schaltwerk hat eine exponierte Position am Fahrrad. Es darf nicht mit dem Laufrad oder mit der Kettenstrebe kollidieren. Eine generell hohe Bodenfreiheit exponierter Bauteile am Fahrrad verringert die Wahrscheinlichkeit von Schäden durch Kollision mit Hindernissen. Auch die Begrenzung des Bauraums im Bereich des Schaltwerks nach rechts (außen) hilft Schäden beim Passieren von Engstellen zu vermeiden. Besondere Bedeutung hat dieser Bauraum auch zur Gewährleistung von kollisionsfreiem Pedalieren ("heel clearance"). Die Entwicklung hin zu kurzen Kettenstreben und möglichst kleinem Q-faktor (seitlicher Pedalabstand, vgl. etwa die Erklärung unter de.wikipedia.org/wiki/Q-Faktor_%28Fahrrad%29) verschärft diesen Bauraumkonflikt.
2. Dämpfermoment
   Um eine optimale Funktion der Feder/Dämpfer-Einheit (wenn vorgesehen) im Systemkontext des gesamten Antriebsstrangs zu gewährleisten, sollte die Abweichung des Dämpfermoments vom vorgesehenen Nominalwert möglichst gering gehalten werden. Auch das Abfallen oder Ansteigen des Dämpfermomentes über die Produktlebensdauer ist problematisch und nach Möglichkeit zu vermeiden oder zumindest klein zu halten. Wesentliche Faktoren für das Dämpfermoment sind:
   - der Reibdurchmesser und Reibflächeninhalte der etwa von Friktionsscheiben bereitgestellten Reibflächen,
   - der benötigte Anpressduck, um ein entsprechendes Reibmoment zu erzeugen,
   - die Federkennlinie der Vorspannfeder.
3. Lagerung der Achse des Schaltwerkskäfigs
   Die Lagerung der Achse oder Drehwelle bestimmt die Schwenkbewegung des Schaltwerkskäfigs. Die Leitrolle am Käfig ("upper pulley") muss präzise zur Zahnkranzkassette positioniert werden, um optimale Schaltperformance zu gewährleisten. Geringes Lagerspiel dieser Achse und eine kurze Toleranzkette in axialer Richtung sind hier wichtig. Weiterhin wird die Lagerung durch das Hebelmoment des Schaltwerkskäfigs bei Schaltvorgängen oder dynamischen Belastungen stark beansprucht. Ein möglichst großer Lagerabstand ist hier von Vorteil, beim Stand der Technik jedoch nicht realisiert.

Vor diesem technischen Hintergrund betrifft die vorliegende Erfindung allgemein ein hinteres Schaltwerk oder einen hinteren Umwerfer einer Fahrradkettenschaltung, und speziell die Art und Weise, wie das bewegliche Element (P-Knuckle) mit den diesem zugeordneten, direkt oder indirekt mit dem Kettenkäfig zusammenwirkenden Komponenten ausgeführt ist, um eine Verbesserung hinsichtlich wenigstens einem der angesprochenen Themen zu erreichen.

### Stand der Technik

Ein Umwerfer wie angesprochen ist beispielsweise aus der DE 10 2007 040 156 A1 bekannt. Der bekannte Umwerfer weist eine Dämpfungseinrichtung mit einer Reibeinrichtung gebildet von einer Mehrzahl von axial gestützten Reibplatten auf. Als Freilaufkupplungseinrichtung ist eine Rollenkupplung radial außerhalb dieser Reibplatten im gleichen Axialbereich angeordnet, was zur Folge hat, dass relativ große radiale Abmessungen für das bewegliche Element in radialer Richtung erforderlich sind. Als Vorteil dieser bekannten Lösung wird in der Offenlegungsschrift eine Einstelleinheit mit einer frei liegenden Einzelmutter zum Einstellen des Reibeingriffs und damit der Gegenkraft herausgestellt, die es ermöglichen soll, dass die Gegenkraft so eingestellt werden kann, wie es der Fahrer bevorzugt. Zu einer solchen Einstellung wird aber ein Werkzeug benötigt werden und es stellt sich die Frage, ob ein normaler Fahrer überhaupt kompetent genug ist, die richtige Gegenkraft einzustellen, so dass in der Praxis durchaus Probleme zu befürchten sind. Es gibt auch keine Sicherungsmaßnahmen gegen eine ungewünschte Verstellung, was aufgrund der frei liegenden, gegen eine Verdrehung nicht gesicherten Mutter zu befürchten ist.

Auch aus der DE 10 2011 114 699 A1 und der korrespondierenden US 8,852,041 B2 sind hintere Fahrradumwerfer der angesprochenen Art in verschiedenen Varianten bekannt, die ebenfalls eine Rollenkupplung verwenden. Als ein inneres Kupplungselement der Rollenkupplung dient ein Abschnitt einer Drehwelle, mit der die Kettenführungsbaugruppe drehbar relativ zum beweglichen Element gelagert ist. Die Reibeinrichtung ist von einer das äußere Kupplungselement der Rollenkupplung umschlingenden Blattfeder gebildet, die mit zwei Endabschnitten radial zwischen zwei Drehnocken oder alternativ zwischen eine Einstellschraube und eine Drehnocke vorstehen, die zum Einstellen einer Grundreibung und zum Steuern einer momentan wirkenden Reibung mittels eines Steuerhebels oder dergleichen dienen, damit der Radfahrer seinen Wünschen entsprechend, beispielsweise geländeabhängig, die momentan wirksame Reibung und damit die momentan wirksame Gegenkraft mittels des zwischen zwei Indexstellungen bewegbaren Steuerhebels wählen kann. Um den Radfahrer diese Wählbarkeit zu geben, ist ein recht hoher mechanischer Aufwand getrieben.

Aus der DE 10 2013 001 952 A1 und der korrespondierenden US 2013/0203532 A1 sind hintere Fahrradumwerfer der angesprochenen Art in verschiedenen Varianten bekannt, bei denen die Reibeinrichtung ein hülsenartiges, sich rings um eine Rollenkupplung erstreckendes Reibungselement mit sich verjüngender oder konischer Außenoberfläche umfasst, wobei das innere Element der Rollenkupplung von einem Abschnitt der die Kettenführungsbaugruppe drehbar lagernden Drehwelle gebildet sein kann.

Die EP 0 031 215 B1 offenbart verschiedene Varianten eines hinteren Fahrradumwerfers der angesprochenen Art, der eine Klinkenkupplung als Freilaufkupplungseinrichtung aufweist, die zusammen mit einer axial gerichtete Reibflächen aufweisenden Reibeinrichtung die Dämpfungseinrichtung bildet.

Ferner ist auf die US 2014/0371013 A1 zu verweisen, aus der ebenfalls ein hinterer Umwerfer mit einer in das bewegliche Element integrierten Dämpfungseinrichtung bekannt ist. Die Dämpfungseinrichtung weist eine Rollenkupplung, eine Reibeinrichtung und ein der Reibeinrichtung zugeordnetes Vorspannelement auf. Die Rollenkupplung ist axial zwischen dem eine axiale Vorspannkraft ausübenden Vorspannelement und der Reibeinrichtung angeordnet. Die Dämpfungseinrichtung ist radial außerhalb einer den Kettenkäfig in der Kettenspannrichtung vorspannenden Torsionsschraubenfeder angeordnet, und zwar vollständig im axialen Erstreckungsbereich der Torsionsschraubenfeder.

Im Kontext der vorliegenden Beschreibung sind verschiedene Varianten von hinteren Umwerfern der angesprochenen Art von besonderem Interesse, die in der DE 10 2014 225 036 A1 und den korrespondierenden Patentschriften US 9,463,846 B2 und EP 2 891 601 B1 gezeigt und im Detail beschrieben sind. Die verschiedenen Varianten des hinteren Umwerfers weisen jeweils eine Dämpfungseinrichtung auf, die eine Reibflächen bereitstellende Reibeinrichtung und eine Rollenkupplung umfasst. Unter Verwendung einer im Folgenden verwendeten Terminologie ist aus der DE 10 2014 225 036 A1 und den korrespondierenden Patentschriften US 9,463,846 B2 und EP 2 891 601 B1 ein hinterer Fahrradumwerfer in verschiedenen Varianten bekannt, welcher umfasst: ein auch ein B-Knuckle bezeichenbares Basiselement, welches an einem Fahrradrahmen montierbar ist; ein eine Aufnahme aufweisendes, auch als P-Knuckle bezeichenbares bewegliches Element, welches mit dem Basiselement beweglich gekoppelt ist; eine im beweglichen Element in der Aufnahme um eine Drehachse drehbar gelagerte Drehwelle; eine relativ zum beweglichen Element um die Drehachse drehbare, auch als Kettenkäfig bezeichenbare Kettenführungsbaugruppe, welche an der Drehwelle drehfest angekoppelt ist; eine erste elastische Kraftspeichereinrichtung, welche dafür konfiguriert ist, eine die Kettenführungsbaugruppe in eine erste Drehrichtung relativ zum beweglichen Element vorspannende Vorspannkraft auf die Kettenführungsbaugruppe auszuüben; und eine Dämpfungseinrichtung, welche dafür konfiguriert ist, über die Drehwelle eine Dämpfungskraft auf die Kettenführungsbaugruppe auszuüben und eine der Dämpfungskraft entsprechende Gegenkraft an einer in Bezug auf das bewegliche Element stationären Abstützung abzustützen, wobei die Dämpfungseinrichtung eine Koppeleinrichtung umfasst, über die die Dämpfungseinrichtung am wenigsten einem von der Abstützung und der Drehwelle angekoppelt ist.

Die Dämpfungseinrichtung ist gegenüber der den Kettenkäfig in der Kettenspannrichtung vorspannenden ersten Kraftspeichereinrichtung in Form einer Torsionsschraubenfeder axial versetzt angeordnet, radial innerhalb dieser Torsionsschraubenfeder. Nach mehreren in den Figuren gezeigten Ausführungsvarianten überlappt die Rollenkupplung mit der Torsionsschraubenfeder nur geringfügig bzw. teilweise, und nach einer in den Figuren gezeigten weiteren Ausführungsvariante überlappt die Rollenkupplung nicht mit der Torsionsschraubenfeder.

Die Offenbarung der Veröffentlichungen DE 10 2014 225 036 A1, US 9,463,846 B2 und EP 2 891 601 B1 wird durch Bezugnahme vollständig in die Offenbarung der vorliegenden Beschreibung einbezogen, da die vorliegende Beschreibung auf die in den vorgenannten Druckschriften geprägten Definitionen, Zusammenhänge und Bauteilfunktionen zurückgreift. Damit sind der Text und Figuren der DE 10 2014 225 036 A1 ebenso wie der Text und die eine bessere Zeichnungsqualität habenden Figuren der US 9,463,846 B2 Bestandteil der vorliegenden Erfindungsbeschreibung zumindest im Sinne der Klarstellung und des Rückgriffs auf die in der DE 10 2014 225 036 A1 bzw. der US 9,463,846 B2 geprägten Definitionen und technischen Zusammenhänge.

Angemerkt sei noch, dass eine Dämpfungseinrichtung eines Schaltwerks auch als Fluiddämpfer oder Hydraulikdämpfer ausgeführt sein kann, wie etwa aus der US 2018/0273139 A1 bekannt ist.

### Erfindung - Aufgabe und Lösung

Es ist eine der vorliegenden Erfindung zugrundeliegende Aufgabe, einen vor allem axial kompakten hinteren Fahrradumwerfer bereitzustellen.

Es ist eine weitere der vorliegenden Erfindung zugrundeliegende Aufgabe, bei einem hinteren Fahrradumwerfer mit einer Dämpfungseinrichtung über eine angenommene Lebensdauer des hinteren Fahrradumwerfers für ein definiertes Dämpfermoment zu sorgen.

Es ist eine weitere der Erfindung zugrundeliegende Aufgabe, für eine definierte, und dynamischen Belastungen standhaltende Lagerung der Kettenführungsbaugruppe mittels der Drehwelle zu sorgen.

Es ist eine weitere der Erfindung zugrundeliegende Aufgabe, eine effiziente Herstellung des Fahrradumwerfers zu ermöglichen, vor allem auch betreffend die Fertigstellung des beweglichen Elements mit der darin drehbar gelagerten Drehwelle und zugehörigen weiteren Komponenten.

Eine weitere der Erfindung zugrundeliegende Aufgabe ist, einen im Hinblick auf wenigstens ein Thema der in der vorstehenden Darlegung des technischen Hintergrunds angesprochenen Themen verbesserten hinteren Fahrradumwerfer bereitzustellen.

Zur Lösung wenigstens einer dieser Aufgaben schlägt die Erfindung gemäß einem ersten unabhängigen Aspekt einen hinteren Fahrradumwerfer vor, der umfasst:
- ein Basiselement, welches an einem Fahrradrahmen montierbar ist;
- ein eine Aufnahme aufweisendes bewegliches Element, welches mit dem Basiselement beweglich gekoppelt ist;
- eine im beweglichen Element in der Aufnahme um eine Drehachse drehbar gelagerte Drehwelle;
- eine relativ zum beweglichen Element um die Drehachse drehbare Kettenführungsbaugruppe, welche an der Drehwelle drehfest angekoppelt ist;
- eine erste elastische Kraftspeichereinrichtung, welche dafür konfiguriert ist, eine die Kettenführungsbaugruppe in eine erste Drehrichtung relativ zu dem beweglichen Element vorspannende Vorspannkraft auf die Kettenführungsbaugruppe auszuüben; und
- eine Dämpfungseinrichtung, welche dafür konfiguriert ist, über die Drehwelle eine Dämpfungskraft auf die Kettenführungsbaugruppe auszuüben und eine der Dämpfungskraft entsprechende Gegenkraft an einer in Bezug auf das bewegliche Element stationären Abstützung abzustützen, wobei die Dämpfungseinrichtung eine Koppeleinrichtung umfasst, über die die Dämpfungseinrichtung an wenigstens einem von der Abstützung und der Drehwelle angekoppelt ist.

Erfindungsgemäß zeichnet sich der hintere Fahrradumwerfer nach dem ersten Aspekt dadurch aus, dass die Koppeleinrichtung radial innerhalb der ersten elastischen Kraftspeichereinrichtung innerhalb deren axialen Erstreckungsbereichs angeordnet ist.

Gegenüber der bekannten Lösung gemäß der DE 10 2014 225 036 A1 und den korrespondierenden weiteren Patentveröffentlichungen ermöglicht die erfindungsgemäße Anordnung der Koppeleinrichtung im axialen Erstreckungsbereich der ersten elastischen Kraftspeichereinrichtung, und zwar radial innerhalb der ersten elastischen Kraftspeichereinrichtung, eine axial kompaktere Ausführung des beweglichen Elements und damit des gesamten hinteren Fahrradumwerfers.

Anzumerken ist, dass die Drehwelle selbst der Koppeleinrichtung zugehörig sein könnte. Es ist auch möglich, dass die Koppeleinrichtung die Dämpfungseinrichtung bildet und dann sowohl an der Drehwelle als auch an der Abstützung angekoppelt ist.

Die Dämpfungseinrichtung kann aber auch wenigstens eine weitere Komponente neben den Koppeleinrichtungen umfassen, beispielsweise eine gegenüber der Koppeleinrichtung gesonderte Reibeinrichtung. In diesem Fall ist es besonders zweckmäßig, wenn die Koppeleinrichtung entweder der Drehwelle zugeordnet ist und die Dämpfungseinrichtung mit dieser koppelt, um die Dämpfungskraft auf die Drehwelle auszuüben, oder der Abstützung zugeordnet ist und die Dämpfungseinrichtung mit dieser koppelt, um die Gegenkraft abzustützen.

Bevorzugt ist die Dämpfungseinrichtung mit der Drehwelle in der Aufnahme aufgenommen. Die erste elastische Kraftspeichereinrichtung könnte in einer zweiten Aufnahme des beweglichen Elements angeordnet sein, wie etwa aus der DE 10 2014 225 036 A1 und den korrespondierenden Druckschriften als solches bekannt. Besonders bevorzugt ist aber eine Ausgestaltung, bei der die erste elastische Kraftspeichereinrichtung und die Dämpfungseinrichtung mit der Drehwelle in die Aufnahme aufgenommen sind.

Als Abstützung kann vorteilhaft ein am beweglichen Element festgelegtes, die Aufnahme verschließendes Deckelelement dienen, welches eine Halterung für die Dämpfungseinrichtung bzw. deren Koppeleinrichtung aufweisen kann.

Die Dämpfungseinrichtung kann vorteilhaft dafür konfiguriert sein, die Dämpfungskraft über die Drehwelle auf die Kettenführungsbaugruppe zumindest dann auszuüben, wenn sich die Kettenführungsbaugruppe in einer zur ersten Drehrichtung entgegengesetzten zweiten Drehrichtung dreht. Dreht sich die Kettenführungsbaugruppe in der ersten Drehrichtung, so kann die über die Drehwelle auf die Kettenführungsbaugruppe ausgeübte Dämpfungskraft reduziert sein oder im Wesentlichen verschwinden. Eine solche Drehrichtungsabhängigkeit ist bevorzugt, aber nicht zwingend.

Vorteilhaft kann die Koppeleinrichtung als Reibeinrichtung ausgeführt sein, die zur Erzeugung der Dämpfungskraft mit wenigstens einem von der Drehwelle und der Abstützung, vorzugsweise mit der Drehwelle, reibschlüssig eingreift. Es kommt auch eine einfache, keine Drehrichtungsabhängigkeit der Dämpfungskraft bewirkende Reibeinrichtung wie etwa eine O-Ring-Anordnung als mit der Drehwelle reibschlüssig eingreifende Koppeleinrichtung in Betracht.

Besonders bevorzugt ist, dass die Koppeleinrichtung als Freilaufkupplung ausgeführt ist, welche dafür konfiguriert ist, die Dämpfungskraft über die Drehwelle auf die Kettenführungsbaugruppe auszuüben oder hieran mitzuwirken, etwa durch Abstützen einer Gegenkraft zur Dämpfungskraft an der Abstützung. Mit einer solchen Freilaufkupplung kann zweckmäßig die vorteilhafte Drehrichtungsabhängigkeit der Dämpfungskraft erreicht werden. Die Freilaufkupplung kann beispielsweise als Schlingfederkupplung ausgeführt sein, die zur Erzeugung der Dämpfungskraft mit der Drehwelle oder der Abstützung, bevorzugt mit der Drehwelle, reibschlüssig eingreift. Die Dämpfungseinrichtung des hinteren Fahrradumwerfers kann so sehr kostengünstig realisiert werden.

Gemäß einer besonders bevorzugten Ausgestaltung umfasst die Dämpfungseinrichtung als Koppeleinrichtung eine Freilaufkupplung, welche ein radial inneres Kupplungselement, ein radial äußeres Kupplungselement und Klemmelemente zwischen den beiden Kupplungselementen aufweist. Die Dämpfungseinrichtung umfasst ferner eine Reibeinrichtung, welche durch eine zweite elastische Kraftspeichereinrichtung in axialer Richtung gegeneinander vorgespannte Reibflächen aufweist, über die die Drehwelle oder die Abstützung an einem der beiden Kupplungselemente angekoppelt ist. Mit solch einer Freilaufkupplung kann erreicht werden, dass bei einer Verdrehung der Kettenführungsbaugruppe in der ersten Drehrichtung keine praktisch relevante Dämpfungskraft über die Drehwelle auf die Kettenführungsbaugruppe ausgeübt wird.

Vorzugsweise ist die Drehwelle über die Reibflächen an einem der beiden Kupplungselemente angekoppelt, und zwar vorzugsweise am radial inneren Kupplungselement. Das andere Kupplungselement ist dann an der Abstützung direkt oder indirekt angekoppelt, beispielsweise formschlüssig oder durch Reibschluss, etwa in einer Presspassung. Die Klemmelemente können vorteilhaft als Klemmrollen ausgeführt sein, so dass die Freilaufkupplung als Rollen-Freilauf oder Rollenkupplung ausgeführt ist.

Entsprechend dem Erfindungsvorschlag des ersten Aspekts der Erfindung können das innere und das äußere Kupplungselement der Freilaufkupplung radial innerhalb der ersten elastischen Kraftspeichereinrichtung innerhalb deren axialen Erstreckungsbereichs angeordnet sein. Die Freilaufkupplung ist dabei als erfindungsgemäße Koppeleinrichtung zu identifizieren.

Betreffend die Reibflächen der Reibeinrichtung wird daran gedacht, dass diese ebenfalls radial innerhalb und im axialen Erstreckungsbereich der ersten elastischen Kraftspeichereinrichtung angeordnet sind.

Die vorzugsweise ein Tellerfederpaket umfassende zweite elastische Kraftspeichereinrichtung kann zweckmäßig radial innerhalb und sich axial überlappend mit der ersten elastischen Kraftspeichereinrichtung angeordnet sein. Es wird vor allem daran gedacht, dass die zweite elastische Kraftspeichereinrichtung vollständig im axialen Erstreckungsbereich der ersten elastischen Kraftspeichereinrichtung angeordnet ist, wodurch der axiale Bauraumbedarf weiter reduziert wird.

Man kann vorteilhaft vorsehen, dass die Reibflächen wenigstens eines Reibflächenpaars der Reibeinrichtung axial zwischen der zweiten elastischen Kraftspeichereinrichtung und der Freilaufkupplung angeordnet sind und die Freilaufkupplung der Kettenführungsbaugruppe axial näher ist als die zweite elastische Kraftspeichereinrichtung.

Nach einer besonders vorteilhaften Ausgestaltung kann die erste elastische Kraftspeichereinrichtung über die Drehwelle an der Kettenführungsbaugruppe angekoppelt sein, um die Vorspannkraft über die Drehwelle auf die Kettenführungsbaugruppe auszuüben. Diese Ausgestaltung ist auch unabhängig von dem Erfindungsvorschlag des ersten Aspekts der Erfindung und sogar unabhängig von dem Vorsehen einer Dämpfungseinrichtung von Interesse und schutzwürdig. Die Erfindung stellt gemäß einem vom ersten Aspekt unabhängigen zweiten Aspekt einen entsprechenden hinteren Fahrradumwerfer bereit, wie im Folgenden im Einzelnen definiert. Die unten dargelegten Erfindungs- und Weiterbildungsvorschläge nach dem zweiten Aspekt sind zugleich auch Weiterbildungsvorschläge für den hinteren Fahrradumwerfer nach dem ersten Aspekt der Erfindung.

Gemäß einer ebenfalls sehr vorteilhaften Ausgestaltung ist vorgesehen, dass die Drehwelle mittels einer Drehlagerung an einem Deckelelement drehbar gelagert ist, welches zusammen mit der sich durch eine Durchgangsöffnung des Deckelelements erstreckenden Drehwelle die Aufnahme des beweglichen Elements verschließt und am beweglichen Element befestigt ist. Auch diese Ausgestaltung des hinteren Fahrradumwerfers ist unabhängig von dem Erfindungsvorschlag nach dem ersten Aspekt und sogar unabhängig von dem Vorsehen einer Dämpfungseinrichtung von Interesse und schutzwürdig. Die Erfindung stellt nach einem von dem ersten und dem zweiten Aspekt der Erfindung unabhängigen dritten Aspekt einen entsprechenden hinteren Fahrradumwerfer bereit, wie unten im Einzelnen definiert. Die unten dargelegten Erfindungs- und Weiterbildungsvorschläge nach dem dritten Aspekt der Erfindung sind zugleich Weiterbildungsvorschläge für den hinteren Fahrradumwerfer nach dem ersten Aspekt der Erfindung.

Zum Lösen wenigstens einer der genannten Aufgaben stellt die Erfindung nach dem angesprochenen zweiten unabhängigen Aspekt einen hinteren Fahrradumwerfer bereit, der umfasst:
- ein Basiselement, welches an einem Fahrradrahmen montierbar ist;
- ein eine Aufnahme aufweisendes bewegliches Element, welches mit dem Basiselement beweglich gekoppelt ist;
- eine im beweglichen Element in der Aufnahme um eine Drehachse drehbar gelagerte Drehwelle;
- eine relativ zum beweglichen Element um die Drehachse drehbare Kettenführungsbaugruppe, welche an der Drehwelle drehfest angekoppelt ist; und
- eine erste elastische Kraftspeichereinrichtung, welche dafür konfiguriert ist, eine die Kettenführungsbaugruppe in eine erste Drehrichtung relativ zu dem beweglichen Element vorspannende Vorspannkraft auf die Kettenführungsbaugruppe auszuüben.

Es ist möglich, aber nicht zwingend, dass der hintere Fahrradumwerfer auch eine Dämpfungseinrichtung aufweist.

Erfindungsgemäß ist nach dem zweiten Aspekt vorgesehen, dass die erste elastische Kraftspeichereinrichtung über die Drehwelle an der Kettenführungsbaugruppe angekoppelt ist, um die Vorspannkraft über die Drehwelle auf die Kettenführungsbaugruppe auszuüben.

Beim angesprochenen Stand der Technik gemäß DE 10 2014 225 036 A1 / US 9,463,846 B2 ist die konkret als Schrauben-Torsionsfeder ausgeführte erste elastische Kraftspeichereinrichtung in einer die Aufnahme ringförmig umgebenden zweiten Aufnahme angeordnet und greift mit einem aus dieser zweiten Aufnahme vorstehenden Koppelabschnitt formschlüssig in eine Zwischenscheibe bzw. in die Zwischenscheibe und eine damit drehfest verbundene Käfigplatte der Kettenführungsbaugruppe ein. Die Drehwelle dient nur zur Drehlagerung der Kettenführungsbaugruppe an bzw. in dem beweglichen Element und zur Ankopplung der bei dem bekannten hinteren Umwerfer vorgesehenen, gemeinsam mit der Drehwelle in der Aufnahme aufgenommenen Dämpfungseinrichtung an der Kettenführungsbaugruppe.

Demgegenüber schlägt die Erfindung nach dem zweiten Aspekt nun vor, dass die ebenfalls beispielsweise als Torsions-Schraubenfeder oder Torsions-Schraubenfederanordnung ausgeführte erste elastische Kraftspeichereinrichtung über die Drehwelle an der Kettenführungsbaugruppe angekoppelt ist, was besonders zweckmäßig durch Anbindung der ersten elastischen Kraftspeichereinrichtung an einem von der Kettenführungsbaugruppe entfernten inneren Endbereich der Drehwelle erfolgen kann.

Der Erfindungsvorschlag des zweiten Aspekts der Erfindung ermöglicht eine ganze Reihe von vorteilhaften Ausgestaltungen des hinteren Umwerfers bzw. dessen beweglichen Elements. So können die erste elastische Kraftspeichereinrichtung, die Drehwelle und weitere Komponenten eine vormontierbare und vorjustierbare Baugruppe bilden, die nach fertiger Justage in die Aufnahme aufgenommen wird. Ein die Aufnahme umfassender Innenraum des beweglichen Elements kann auf einfacher Weise gegenüber der Umgebung abgedichtet sein und einer Art "hermetisch dichtes Maschinengehäuse" für die darin aufgenommenen Komponenten bilden. Eine zweite Aufnahme für die erste elastische Kraftspeichereinrichtung kann entfallen und braucht dementsprechend nicht nach außen abgedichtet werden, wenn man ein solches "hermetisch dichtes Maschinengehäuse" vorsehen möchte. Eine solche Abdichtung wurde bei den oben angesprochenen bekannten Lösungen auch nie umgesetzt, da die dort vorgesehene zweite Aufnahme praktisch nicht oder allenfalls mit großem Aufwand abdichtbar wäre, wegen des großen Durchmessers eines durch die zweite Aufnahme bedingten Luftspalts und wegen sehr langer Toleranzketten in axialer Richtung. Bei den bekannten Lösungen musste deshalb eine Anfälligkeit für Verschmutzungen in Kauf genommen werden.

Weitere durch den Erfindungsvorschlag ermöglichte vorteilhafte Ausgestaltungen ergeben sich aus den im Folgenden dargelegten Weiterbildungsvorschlägen, die zugleich auch Weiterbildungsvorschläge für den hinteren Umwerfer nach dem ersten Aspekt der Erfindung sind.

Wie schon erwähnt, kann auch der hintere Fahrradumwerfer nach dem zweiten Aspekt eine Dämpfungseinrichtung aufweisen, welche dafür konfiguriert ist, über die Drehwelle eine Dämpfungskraft auf die Kettenführungsbaugruppe auszuüben und eine der Dämpfungskraft entsprechende Gegenkraft an einer in Bezug auf das bewegliche Element stationären Abstützung abzustützen, wobei die Dämpfungseinrichtung eine Koppeleinrichtung umfasst, über die die Dämpfungseinrichtung an wenigstens einem von der Abstützung und der Drehwelle angekoppelt ist.

Anzumerken ist, dass die Drehwelle selbst der Koppeleinrichtung zugehörig sein könnte. Die Koppeleinrichtung kann die Dämpfungseinrichtung bilden und ist dann sowohl an der Drehwelle als auch an der Abstützung angekoppelt. Die Dämpfungseinrichtung kann aber auch wenigstens eine weitere Komponente neben der Koppeleinrichtung umfassen, beispielsweise eine gegenüber der Koppeleinrichtung gesonderte Reibeinrichtung. In diesem Fall ist es besonders zweckmäßig, wenn die Koppeleinrichtung entweder der Drehwelle zugeordnet ist und die Dämpfungseinrichtung mit dieser koppelt, um die Dämpfungskraft auf die Drehwelle auszuüben, oder der Abstützung zugeordnet ist und die Dämpfungseinrichtung mit dieser koppelt, um die Gegenkraft abzustützen. Bevorzugt ist die Dämpfungseinrichtung mit der Drehwelle in die Aufnahme aufgenommen. Die erste elastische Kraftspeichereinrichtung könnte in einer zweiten Aufnahme des beweglichen Elements angeordnet sein, wie aus der angesprochenen DE 10 2014 225 036 A1 / US 2016/0304160 A9 als solches bekannt. Besonders bevorzugt ist aber, wie schon erwähnt, eine solche Ausgestaltung, bei der die erste elastische Kraftspeichereinrichtung und die Dämpfungseinrichtung mit der Drehwelle in die Aufnahme aufgenommen sind. Als Abstützung kann vorteilhaft ein am beweglichen Element festgelegtes, die Aufnahme verschließendes Deckelelement dienen, welches eine Halterung für die Dämpfungseinrichtung bzw. deren Koppeleinrichtung aufweisen kann.

Entsprechend dem Erfindungsvorschlag nach dem ersten Aspekt wird weiterbildend vorgeschlagen, dass die Koppeleinrichtung radial innerhalb der ersten elastischen Kraftspeichereinrichtung innerhalb deren axialen Erstreckungsbereichs angeordnet ist. Dementsprechend sind die oben angegebenen Weiterbildungsvorschläge zur Erfindung nach dem ersten Aspekt zugleich auch Weiterbildungsvorschläge für den hinteren Fahrradumwerfer nach dem zweiten Aspekt.

Gegenüber der bekannten Lösung gemäß der DE 10 2014 225 036 A1 und den korrespondierenden weiteren Patentveröffentlichungen ermöglicht die vorgeschlagene Anordnung der Koppeleinrichtung im axialen Erstreckungsbereich der ersten elastischen Kraftspeichereinrichtung, und zwar radial innerhalb der ersten elastischen Kraftspeichereinrichtung, eine axial kompaktere Ausführung des beweglichen Elements und damit des gesamten hinteren Fahrradumwerfers.

Es wird vor allem daran gedacht, dass die Dämpfungseinrichtung dafür konfiguriert ist, die Dämpfungskraft über die Drehwelle auf die Kettenführungsbaugruppe zumindest dann auszuüben, wenn sich die Kettenführungsbaugruppe in einer zur ersten Drehrichtung entgegengesetzten zweiten Drehrichtung dreht. Dreht sich die Kettenführungsbaugruppe in der ersten Drehrichtung, so kann die über die Drehwelle auf die Kettenführungsbaugruppe ausgeübte Dämpfungskraft reduziert sein oder im Wesentlichen verschwinden. Wie im Zusammenhang mit dem ersten Aspekt der Erfindung diskutiert, ist eine Drehrichtungsabhängigkeit der Dämpfungskraft zwar bevorzugt, aber nicht zwingend.

Die Koppeleinrichtung kann als Reibeinrichtung ausgeführt sein, die zur Erzeugung der Dämpfungskraft mit wenigstens einem von der Drehwelle und der Abstützung, vorzugsweise mit der Drehwelle, reibschlüssig eingreift. Es kommt auch eine sehr einfache Reibeinrichtung wie etwa eine O-Ring-Anordnung als mit der Drehwelle reibschlüssig eingreifende Koppeleinrichtung in Betracht.

Nach einer zweckmäßigen Ausgestaltung kann die Koppeleinrichtung als Freilaufkupplung ausgeführt sein, welche dafür konfiguriert ist, die Dämpfungskraft über die Drehwelle auf die Kettenführungsbaugruppe auszuüben oder hieran mitzuwirken, etwa durch Abstützen einer Gegenkraft zur Dämpfungskraft an der Abstützung. Nach einer kostengünstig realisierbaren Lösung ist die Freilaufkupplung als Schlingfederkupplung ausgeführt, die zur Erzeugung der Dämpfungskraft mit der Drehwelle oder der Abstützung, vorzugsweise der Drehwelle, reibschlüssig eingreift.

Besonders bevorzugt ist aber eine Realisierung, bei der die Dämpfungseinrichtung als Koppeleinrichtung eine Freilaufkupplung umfasst, welche ein radial inneres Kupplungselement, ein radial äußeres Kupplungselement und Klemmelemente zwischen den beiden Kupplungselementen aufweist. In diesem Fall umfasst die Dämpfungseinrichtung ferner eine Reibeinrichtung, welche durch eine zweite elastische Kraftspeichereinrichtung in axialer Richtung gegeneinander vorgespannte Reibflächen aufweist, über die die Drehwelle oder die Abstützung an einem der beiden Kupplungselemente angekoppelt ist.

Vorzugsweise ist die Drehwelle an einem der beiden Kupplungselemente angekoppelt. Dabei wird vor allem daran gedacht, dass das radial innere Kupplungselement über die Reibflächen an der Drehwelle angekoppelt ist. Das andere Kupplungselement ist dann an der Abstützung direkt oder indirekt angekoppelt, beispielsweise formschlüssig oder durch Reibschluss, etwa in einer Presspassung. Man kann die Klemmelemente zweckmäßig als Klemmrollen ausführen, so dass die Freilaufkupplung als Rollen-Freilauf oder Rollenkupplung ausgeführt ist.

Weiterbildend wird vorgeschlagen, dass die vorzugsweise ein Tellerfederpaket umfassende zweite elastische Kraftspeichereinrichtung radial innerhalb und sich axial überlappend mit der ersten elastischen Kraftspeichereinrichtung angeordnet ist. Auch diese Ausgestaltung trägt zu einer axial kompakten Ausführung des beweglichen Elements (P-Knuckle) bei. Zu diesem Zweck kann man die zweite elastische Kraftspeichereinrichtung auch vollständig im axialen Erstreckungsbereich der ersten elastischen Kraftspeichereinrichtung anordnen.

Betreffend die relative Anordnung der verschiedenen Komponenten in der Aufnahme des beweglichen Elements bestehen grundsätzlich vielfältige Möglichkeiten. Als besonders zweckmäßig wird vorgeschlagen, dass die Reibflächen wenigstens eines Reibflächenpaars der Reibeinrichtung axial zwischen der zweiten elastischen Kraftspeichereinrichtung und der Freilaufkupplung angeordnet sind und die Freilaufkupplung der Kettenführungsbaugruppe axial näher ist als die zweite elastische Kraftspeichereinrichtung. Man kann weiter vorsehen, dass Reibflächen der Reibeinrichtung radial innerhalb und im axialen Erstreckungsbereich der ersten elastischen Kraftspeichereinrichtung angeordnet sind.

Nach einer besonders vorteilhaften Realisierung sind die Drehwelle und die Dämpfungseinrichtung in eine Baueinheit integriert, die in die Aufnahme des beweglichen Elements aufgenommen bzw. aufnehmbar und am beweglichen Element befestigt bzw. befestigbar ist. Die Baueinheit kann ein der Kettenführungsbaugruppe axial eng benachbartes Deckelelement aufweisen, welches zusammen mit der sich durch eine Durchgangsöffnung des Deckelelements erstreckenden Drehwelle die Aufnahme verschließt und am beweglichen Element befestigt bzw. befestigbar ist. Besonders zweckmäßig ist, wenn auch die erste elastische Kraftspeichereinrichtung, die vorzugsweise als Schrauben-Torsionsfederanordnung ausgeführt ist, in die Baueinheit integriert ist.

Ist keine Dämpfungseinrichtung vorgesehen, so kann die Baueinheit die Drehwelle, das Deckelelement und die erste elastische Kraftspeichereinrichtung umfassen.

Das Vorsehen der Baueinheit ermöglicht eine Vormontage und Vorjustage der in die Aufnahme aufzunehmenden Komponenten außerhalb des beweglichen Elements, was die entsprechenden Arbeitsvorgänge erleichtert und somit eine effiziente Montage und damit Herstellung des hinteren Umwerfers ermöglicht.

Zweckmäßig kann man vorsehen, dass ein/das die Aufnahme verschließendes Deckelelement eine Halterung für die Dämpfungseinrichtung oder eine/die Freilaufkupplung der Dämpfungseinrichtung aufweist, über die eine Gegenkraft zur über die Drehwelle auf die Kettenführungsbaugruppe ausgeübten Dämpfungskraft am Deckelelement und damit mittelbar am beweglichen Element abgestützt wird.

Die Halterung kann von einem von einer Innenseite des Deckelelements in die Aufnahme axial vorstehenden Hülsenabschnitt oder von mehreren von der Innenseite des Deckelelements in die Aufnahme axial vorstehenden, in einer Umfangsrichtung gegeneinander versetzten Halterungsvorsprüngen gebildet sein. Es kann dann die Dämpfungseinrichtung oder - wenn vorgesehen - ein radial äußeres, ggf. als Kupplungshülse ausgeführtes Kupplungselement der vorzugsweise als Rollenkupplung ausgeführten Freilaufkupplung drehfest in dem Hülsenabschnitt bzw. zwischen die Halterungsvorsprünge aufgenommen sein.

Für die gewünschte axial kompakte Ausgestaltung des beweglichen Elements kann die Freilaufkupplung radial innerhalb und sich axial überlappend mit der ersten Kraftspeichereinrichtung angeordnet sein, vorzugsweise vollständig im axialen Erstreckungsbereich der ersten elastischen Kraftspeichereinrichtung. Die Freilaufkupplung ist somit als Koppeleinrichtung im Sinne des ersten Aspekts der Erfindung zu identifizieren.

Allgemein wird vorgeschlagen, dass die Dämpfungseinrichtung oder eine/die Freilaufkupplung der Dämpfungseinrichtung vollständig im axialen Erstreckungsbereich der ersten elastischen Kraftspeichereinrichtung angeordnet ist.

Betreffend die Lagerung der Drehwelle wird vorgeschlagen, dass diese mittels einer ersten Drehlagerung an dem beweglichen Element drehbar gelagert ist, welche an einem die Aufnahme in axialer Richtung begrenzenden, von der Kettenführungsbaugruppe abgewandten Bereich des beweglichen Elements vorgesehen ist. Wie im Stand der Technik könnte die Aufnahme bzw. das bewegliche Element hier eine Öffnung aufweisen, in die ein Lagerabschnitt der Drehwelle eingreift. Demgegenüber ist es aber bevorzugt, dass die erste Drehlagerung einen in die Aufnahme vorstehenden Lagerzapfen und eine den Lagerzapfen aufnehmende Lagerbuchse umfasst, wobei die Drehwelle vermittels der Lagerbuchse an dem Lagerzapfen drehbar gelagert ist. Dies ermöglicht, dass das bewegliche Element an der von der Kettenführungsbaugruppe abgewandten Seite geschlossen ausgeführt ist, sodass ein Deckelelement auf dieser Seite des beweglichen Elements unnötig ist und kein Abdichtungsbedarf besteht.

Vorteilhaft können der Lagerzapfen und die Lagerbuchse ein Gleitlager für die Drehwelle bilden. Nach einer besonders zweckmäßigen Ausgestaltung umfasst die Lagerbuchse eine in einem Endbereich der Drehwelle ausgeführte axiale Bohrung, in die der Lagerzapfen aufgenommen ist. Die Lagerbuchse kann also einteilig mit der Drehwelle ausgeführt sein.

Zweckmäßig kann ein/das die Aufnahme verschließende Deckelelement an einem Außenumfang mit wenigstens einer Befestigungsformation ausgeführt sein, die mit wenigstens einer Gegen-Befestigungsformation des beweglichen Elements an einem Innenumfang der Aufnahme formschlüssig, reibschlüssig oder stoffschlüssig eingreift. So kann man das Deckelelement für einen festen reibschlüssigen Eingriff in einer Presspassung in einem Endbereich der Aufnahme aufnehmen. Für einen stoffschlüssigen Eingriff kommt speziell eine Verklebung in Betracht. Für einen reibschlüssigen oder stoffschlüssigen Eingriff können die Befestigungsformation am Außenumfang und die Gegen-Befestigungsformation am Innenumfang einfach als geeignet gestaltete, im wesentlichen strukturlose Umfangsflächen ausgeführt sein. Ein geeigneter formschlüssiger Eingriff lässt sich durch eine Schraub- oder Bajonettverbindung zwischen dem Deckelelement und dem beweglichen Element an dem Innerumfang der Aufnahme erreichen. So wird daran gedacht, dass das Deckelelement ein Außengewinde als Befestigungsformation und das bewegliche Element ein Innengewinde als Gegen-Befestigungsformation aufweist. Vorzugsweise sind die Gewinde mehrgängig ausgeführt.

Wie schon angesprochen, kann ein Innenraum der Aufnahme, der von dem beweglichen Element und einem/dem die Aufnahme verschließenden Deckelelement begrenzt ist, nach außen abgedichtet sein. So kann das bewegliche Element mit dem Deckelelement ein hermetisch dichtes Maschinengehäuse für die in der Aufnahme angeordneten Komponenten bilden, was für die Gewährleistung definierter Eigenschaften über eine lange Lebensdauer sehr vorteilhaft ist. Korrosion und das Eindringen von Schmutz kann so vermieden werden.

Nach einer besonders bevorzugten Ausgestaltung ist die Drehwelle mittels einer im Bereich der Durchgangsöffnung oder eng benachbart zu dieser vorgesehenen zweiten Drehlagerung drehbar an einem/dem die Aufnahme verschließenden Deckelelement gelagert.

Gemäß dem angesprochenen Stand der Technik der DE 10 2014 225 036 A1 / US 9,463,846 B2 ist die Drehwelle direkt oder indirekt an Innenumfangsabschnitten des beweglichen Elements gelagert. Die der Kettenführungsbaugruppe nähere Lagerstelle ist aufgrund der erwähnten Zwischenscheibe etwas in den Innenbereich des beweglichen Elements verlagert. Die hier vorgeschlagene Lagerung der Drehwelle am Deckelelement und damit mittelbar am beweglichen Element ermöglicht, dass diese Lagerstelle etwas nach radial außen in Richtung zur Kettenführungsbaugruppe versetzt ist und dass in Verbindung mit der ersten Drehlagerung ein besonders großer Lagerabstand erreichbar ist, für eine präzise Lagerung der Drehwelle. Es können ein geringeres Lagerspiel für die Drehwelle und eine kürzere Toleranzkette in axialer Richtung gewährleistet werden.

Die vorgeschlagene Lagerung der Drehwelle an einem solchen Deckelelement und damit vermittels des Deckelelements nur mitteilbar an dem beweglichen Element ist auch unabhängig von dem Erfindungsvorschlag des zweiten Aspekts und auch unabhängig von dem Vorsehen einer Dämpfungseinrichtung von Interesse und schützenswert. Dementsprechend stellt die Erfindung nach einem vom ersten Aspekt und zweiten Aspekt unabhängigen dritten Aspekt einen entsprechenden hinteren Umwerfer bereit, wie unten im Einzelnen definiert. Die unten dargelegten Erfindungs- Weiterbildungsvorschläge für den hinteren Umwerfer des dritten Aspekts der Erfindung sind zugleich auch Weiterbildungsvorschläge für die Erfindung nach dem zweiten Aspekt.

Zweckmäßig kann man vorsehen, dass die zweite Drehlagerung eine Innenumfangsfläche der Durchgangsöffnung umfasst, die mit einer Außenumfangsfläche der Drehwelle ein Gleitlager bildet.

Betreffend die Anordnung und speziell Anbindung der ersten elastischen Kraftspeichereinrichtung wird vorgeschlagen, dass diese an einem ersten Koppelbereich mit einem/dem die Aufnahme verschließenden Deckelelement formschlüssig gekoppelt ist und an einem zweiten Koppelbereich mit einem von der Drehwelle radial vorstehenden, an der Drehwelle drehfest angekoppelten Koppelglied formschlüssig gekoppelt ist, um die Vorspannkraft über das Koppelglied auf die Drehwelle und damit auf die Kettenführungsbaugruppe auszuüben. Die Abstützung der Gegenkraft zur Vorspannkraft erfolgt an dem Deckelelement und damit mittelbar an dem beweglichen Element.

Das Koppelglied kann einteilig sein, oder auch mehrteilig, etwa zweiteilig. Letzteres kann Vorteile für die Herstellung und Montage bieten. Bevorzugt ist speziell ein teller- oder flanschartiges Element, welches je nach Ausgestaltung auch als Federflansch oder Federteller bezeichenbar ist.

Man kann zweckmäßig vorsehen, dass an der Drehwelle angekoppelte oder ankoppelbare Reibflächen einer/der Dämpfungseinrichtung durch eine/die zweite elastische Kraftspeichereinrichtung gegeneinander vorgespannt werden und dass das Koppelglied einer von der zweiten elastischen Kraftspeichereinrichtung ausgeübten axialen Druckkraft ausgesetzt ist und diese an der Drehwelle abstützt oder an der Abstützung der ausgeübten axialen Druckkraft an der Drehwelle mitwirkt. Das Koppelglied kann somit mehrere Funktionen erfüllen, was einen kompakten Aufbau ermöglicht.

Es wird speziell daran gedacht, dass die zweite elastische Kraftspeichereinrichtung das Koppelglied, welches in einem von dem Deckelelement beanstandeten Bereich der Drehwelle auf dieser axial beweglich angeordnet ist, axial vorspannt. Ferner wird vorgeschlagen, dass die Reibflächen von einer Abstützanordnung bereitgestellt sind, über die eine von der zweiten elastischen Kraftspeichereinrichtung ausgeübten axiale Druckkraft an der Drehwelle abgestützt wird. Auch diese Ausgestaltungen sind vorteilhaft, insbesondere da sie für einen kompakten Aufbau zweckmäßig sind.

Nach der besonders bevorzugten Ausgestaltung werden von der zweiten elastischen Kraftspeichereinrichtung in entgegengesetzte axiale Richtungen ausgeübte erste und zweite axiale Druckkräfte unter Herstellung eines geschlossenen Kraftflusses beide an der Drehwelle abgestützt, und zwar vorzugsweise ohne Mitwirkung des beweglichen Elements, über den dieser Kraftfluss also nicht verläuft. Nach dem Stand der Technik gemäß DE 10 2014 225 036 A1 / US 9,463,346 B2 wirkt das bewegliche Element an der Abstützung der Druckkräfte der der Dämpfungseinrichtung zugehörigen zweiten elastischen Kraftspeichereinrichtung mit, worauf nach dem Weiterbildungsvorschlag verzichtet werden kann.

Nach einer zweckmäßigen Ausgestaltung ist vorgesehen, dass ein Hülsenelement der Abstützanordnung, welches ein/das radial innere Kupplungselement einer/der Freilaufkupplung bildet oder in dem als Kupplungshülse ausgeführten radial inneren Kupplungselement der Freilaufkupplung drehfest aufgenommen ist, wenigstens eine Reibfläche der Dämpfungseinrichtung bereitstellt. Dabei kann das Hülsenelement an einem Flanschabschnitt eine erste Reibfläche der Dämpfungseinrichtung bereitstellen und ein dem Flanschabschnitt axial benachbartes Reibglied der Abstützanordnung, welches an der Drehwelle axial beweglich aber drehfest gehalten ist, kann eine mit der ersten Reibfläche reibschlüssig eingreifende zweite Reibfläche der Dämpfungseinrichtung bereitstellen.

Nach einer zweckmäßigen ersten Variante bildet eine an der Drehwelle axial beweglich aber drehfest gehaltene Reibscheibe das Reibglied. Dieses Reibglied wirkt vorzugsweise nicht daran mit, die Vorspannkraft der ersten elastischen Kraftspeichereinrichtung über die Drehwelle auf die Kettenführungsbaugruppe auszuüben.

Nach einer zweckmäßigen zweiten Variante bilden ein/das an einem Koppelbereich der ersten elastischen Kraftspeichereinrichtung formschlüssig angekoppeltes Koppelglied das Reibglied. Dieses Koppelglied wirkt daran mit, die Vorspannkraft der ersten elastischen Kraftspeichereinrichtung über die Drehwelle auf die Kettenführungsbaugruppe auszuüben.

Die Reibeinrichtung kann auch noch mit weiteren Reibflächen ausgestattet sein. So kann das Hülsenelement an einem dem Flanschabschnitt entgegengesetzten Endbereich eine dritte Reibfläche bereitstellen und eine Oberflächenstruktur der Drehwelle kann eine mit der zweiten Reibfläche reibschlüssig eingreifende vierte Reibfläche der Reibeinrichtung bereitstellen. Vorteilhaft können die dritte und die vierte Reibfläche als in einem Querschnitt gegenüber einer Radialebene zur Drehachse schräg verlaufende Reibflächen ausgeführt sein. Hierdurch kann eine vorteilhafte Zentrierungswirkung erreicht werden und die Flächeninhalte der Reibflächen sind gegenüber axialen Reibflächen, also axial gerichteten Reibflächen, vergrößert.

Man kann noch weitere Reibflächen-Paarungen vorsehen, um die Dämpfungskraft der Dämpfungseinrichtung entsprechend zu dimensionieren. Die Dämpfungskraft wird durch die Flächeninhalte der Reibflächen, den wirksamen Radien der Reibflächen und der Vorspannkraft der zweiten Kraftspeichereinrichtung bestimmt bzw. mitbestimmt.

Vorteilhaft kann ein Einstellelement vorgesehen sein, welches an einem Innengewinde an einem Außengewinde mit einem Außengewinde der Drehwelle in Gewindeeingriff steht und zur Einstellung einer axialen Vorspannkraft der zweiten elastischen Kraftspeichereinrichtung dient. Bevorzugt ist, dass das Außengewinde an einem von der Kettenführungsbaugruppe beabstandeten Endbereich der Drehwelle angeordnet ist, sodass das Einstellelement innen in der Aufnahme des beweglichen Elements angeordnet ist. Dies vermeidet oder erschwert, dass das Einstellelement unautorisiert durch einen Nutzer verstellt wird. Vielmehr soll die Einstellung der axialen Vorspannkraft der zweiten elastischen Kraftspeichereinrichtung bei der Herstellung des hinteren Umwerfers erfolgen.

Das Einstellelement kann, unabhängig von der bevorzugten verborgenen Anordnung des Einstellelements im Inneren des beweglichen Elements, gegen eine Verstellung gesichert sein, um eine fabrikseitige Einstellung der axialen Vorspannkraft der zweiten elastischen Kraftspeichereinrichtung aufrechtzuerhalten. Als Sicherungsmaßnahmen kommen Verstemmungen und sonstige Schraubensicherungsmittel einschließlich Verklebung in Betracht.

Im Zusammenhang mit dem Einstellelement wird weiterbildend vorgeschlagen, dass eine von der zweiten elastischen Kraftspeichereinrichtung ausgeübte erste axiale Druckkraft über das Einstellelement an der Drehwelle abgestützt wird und eine von der zweiten elastischen Kraftspeichereinrichtung ausgeübte zweite axiale Druckkraft, die zur ersten axialen Druckkraft entgegengesetzt gerichtet ist, über eine die Reibflächen umfassende Abstützanordnung an der Drehwelle abgestützt wird.

Nach einer/der ersten Variante wird hierzu weiter vorgeschlagen, dass das Einstellelement einen Axialanschlag für ein/das Koppelglied definiert, welches an einem Koppelbereich der ersten elastischen Kraftspeichereinrichtung formschlüssig angekoppelt ist und daran mitwirkt, die Vorspannkraft der ersten elastischen Kraftspeichereinrichtung über die Drehwelle auf die Kettenführungsbaugruppe auszuüben, wobei die von der zweiten elastischen Kraftspeichereinrichtung ausgeübte erste axiale Druckkraft über das Koppelglied und das Einstellelement an der Drehwelle abgestützt wird. Alternativ ist es nach einer/der zweiten Variante zweckmäßig, dass die Abstützanordnung ein/das Koppelglied umfasst, welches an einem Koppelbereich der ersten elastischen Kraftspeichereinrichtung formschlüssig angekoppelt ist und daran mitwirkt, die Vorspannkraft der ersten elastischen Kraftspeichereinrichtung über die Drehwelle auf die Kettenführungsbaugruppe auszuüben. Das Koppelglied kann dann vorteilhaft als Reibglied der/einer Reibeinrichtung dienen.

Gemäß dem angesprochenen, von dem ersten und dem zweiten Aspekt unabhängigen dritten Aspekt der Erfindung stellt diese einen hinteren Fahrradumwerfer bereit, der umfasst:
- ein Basiselement, welches an einem Fahrradrahmen montierbar ist;
- ein eine Aufnahme aufweisendes bewegliches Element, welches mit dem Basiselement beweglich gekoppelt ist;
- eine im beweglichen Element in der Aufnahme um eine Drehachse drehbar gelagerte Drehwelle;
- eine relativ zum beweglichen Element um die Drehachse drehbare Kettenführungsbaugruppe, welche an der Drehwelle drehfest angekoppelt ist; und
- eine erste elastische Kraftspeichereinrichtung, welche dafür konfiguriert ist, eine die Kettenführungsbaugruppe in eine erste Drehrichtung relativ zu dem beweglichen Element vorspannende Vorspannkraft auf die Kettenführungsbaugruppe auszuüben.

Es ist möglich, dass der Fahrradumwerfer mit einer Dämpfungseinrichtung ausgeführt ist. Dies ist aber nicht zwingend.

Erfindungsgemäß wird nach dem dritten Aspekt vorgeschlagen, dass die Drehwelle mittels einer Drehlagerung an einem Deckelelement drehbar gelagert ist, welches zusammen mit der sich durch eine Durchgangsöffnung des Deckelelements erstreckenden Drehwelle die Aufnahme des beweglichen Elements verschließt und am beweglichen Element befestigt ist. Hierdurch werden verschiedene vorteilhafte Ausgestaltungen ermöglicht. Ein Vorteil ist, dass die am Deckelelement vorgesehenen Drehlagerung in Bezug auf die Aufnahme des beweglichen Elements in engem axialen Abstand von der Kettenführungsbaugruppe vorgesehen sein kann, was in Verbindung mit einem vorzugsweise vorzusehenden weiteren Drehlager für die Drehwelle einen relativ großen Lagerabstand ermöglicht. Beim Stand der Technik gemäß DE 10 2014 225 036 A1 / US 9,463,846 B2 befindet sich das der Kettenführungsbaugruppe axial nähere Drehlager aufgrund einer innen an einer Käfigplatte der Kettenführungsbaugruppe drehfest angeordneten Zwischenscheibe etwas nach innen in die Aufnahme versetzt. Nach dem Erfindungsvorschlag lassen sich im Übrigen ein geringes Lagerspiel für die Drehwelle und eine kurze Toleranzkette in axialer Richtung erreichen. Die Drehwelle ist vermittels des Deckelelements mittels der erfindungsgemäßen Drehlagerung mittelbar am beweglichen Element gelagert.

Die im Folgenden dargelegten Weiterbildungsvorschläge für den erfindungsgemäßen hinteren Fahrradumwerfer nach dem dritten Aspekt sind zugleich auch Weiterbildungsvorschläge für den hinteren Fahrradumwerfer nach dem ersten Aspekt und Weiterbildungsvorschläge für den hinteren Fahrradumwerfer nach dem zweiten Aspekt der Erfindung.

Vorteilhaft kann vorgesehen werden, dass auch die erste elastische Kraftspeichereinrichtung, die vorzugsweise als Schrauben-Torsionsfederanordnung ausgeführt ist, in die Aufnahme aufgenommen ist.

Zum Deckelelement wird vorgeschlagen, dass dieses an einem Außenumfang mit wenigstens einer Befestigungsformation ausgeführt ist, die mit wenigstens einer Gegen-Befestigungsformation des beweglichen Elements an einem Innenumfang der Aufnahme formschlüssig, reibschlüssig oder stoffschlüssig eingreift. So kann man das Deckelelement für einen festen reibschlüssigen Eingriff in einer Presspassung in einem Endbereich der Aufnahme aufnehmen. Für einen stoffschlüssigen Eingriff kommt speziell eine Verklebung in Betracht. Für einen reibschlüssigen oder stoffschlüssigen Eingriff können die Befestigungsformation am Außenumfang und die Gegen-Befestigungsformation am Innenumfang einfach als geeignet gestaltete Umfangsflächen, im wesentlichen strukturlose Umfangsflächen ausgeführt sein. Ein geeigneter formschlüssiger Eingriff lässt sich durch eine Schraub- oder Bajonettverbindung zwischen dem Deckelelement und dem beweglichen Element an dem Innerumfang der Aufnahme erreichen. So wird daran gedacht, dass das Deckelelement ein Außengewinde als Befestigungsformation und das bewegliche Element ein Innengewinde als Gegen-Befestigungsformation aufweist. Vorzugsweise sind die Gewinde mehrgängig ausgeführt.

Betreffend die erfindungsgemäße Drehlagerung wird vor allem daran gedacht, dass diese im Bereich der Durchgangsöffnung oder eng benachbart zu dieser vorgesehen ist. Die Drehlagerung kann eine Innenumfangsfläche der Durchgangsöffnung umfassen, die mit einer Außenumfangsfläche der Drehwelle ein Gleitlager bildet.

Die erfindungsgemäße Drehlagerung entspricht der zweiten Drehlagerung nach den erläuterten Weiterbildungsvorschlägen zum hinteren Umwerfer des zweiten Aspekts der Erfindung.

Vorteilhaft kann die Drehwelle mittels einer weiteren Drehlagerung an dem beweglichen Element drehbar gelagert sein. Vorzugsweise ist diese weitere Drehlagerung an einem die Aufnahme in axialer Richtung begrenzenden, von der Kettenführungsbaugruppe abgewandten Bereich des beweglichen Elements vorgesehen. Wie im Stand der Technik könnte die Aufnahme bzw. das bewegliche Element hier eine Öffnung aufweisen, in die ein Lagerabschnitt der Drehwelle eingreift. Demgegenüber ist es aber bevorzugt, dass die erste Drehlagerung einen in die Aufnahme vorstehenden Lagerzapfen und eine den Lagerzapfen aufnehmende Lagerbuchse umfasst, wobei die Drehwelle vermittels der Lagerbuchse an dem Lagerzapfen drehbar gelagert ist. Dies ermöglicht, dass das bewegliche Element an der von der Kettenführungsbaugruppe abgewandten Seite geschlossen ausgeführt ist, sodass ein Deckelelement auf diese Seite des beweglichen Elements unnötig ist und kein Abdichtungsbedarf besteht.

Der Lagerzapfen und die Lagerbuchse können ein Gleitlager für die Drehwelle bilden. Die Lagerbuchse kann vorteilhaft eine in einem Endbereich der Drehwelle ausgeführte axiale Bohrung umfassen, in die der Lagerzapfen aufgenommen ist. Die Lagerbuchse kann also einteilig mit der Drehwelle ausgeführt sein.

Die vorgeschlagene weitere Drehlagerung entspricht der ersten Drehlagerung nach den Weiterbildungsvorschlägen zum hinteren Fahrradumwerfer des zweiten Aspekts der Erfindung.

Zweckmäßig kann ein von dem beweglichen Element und dem Deckelelement begrenzter Innenraum der Aufnahme nach außen abgedichtet sein. Das bewegliche Element kann mit dem Deckelelement vorteilhaft ein hermetisch dichtes Maschinengehäuse für die in der Aufnahme angeordneten Komponenten bilden.

Das Deckelelement kann mit der Drehwelle und vorzugsweise auch der ersten elastischen Kraftspeichereinrichtung zu einer Baueinheit integriert sein, die in die Aufnahme des beweglichen Elements aufgenommen bzw. aufnehmbar und am beweglichen Element befestigt bzw. befestigbar ist.

Auch für den hinteren Fahrradumwerfer nach dem dritten Aspekt der Erfindung wird vorgeschlagen, dass dieser mit einer Dämpfungseinrichtung ausgeführt ist, welche dafür konfiguriert ist, über die Drehwelle eine Dämpfungskraft auf die Kettenführungsbaugruppe auszuüben und eine der Dämpfungskraft entsprechende Gegenkraft an einer in Bezug auf das bewegliche Element stationären Abstützung abzustützen, wobei die Dämpfungseinrichtung eine Koppeleinrichtung umfasst, über die die Dämpfungseinrichtung an wenigstens einem von der Abstützung und der Drehwelle angekoppelt ist.

Anzumerken ist, dass die Drehwelle selbst der Koppeleinrichtung zugehörig sein könnte. Die Koppeleinrichtung kann die Dämpfungseinrichtung bilden und ist dann sowohl an der Drehwelle als auch an der Abstützung angekoppelt. Die Dämpfungseinrichtung kann aber auch wenigstens eine weitere Komponente neben der Koppeleinrichtung umfassen, beispielsweise eine gegenüber der Koppeleinrichtung gesonderte Reibeinrichtung. In diesem Fall ist es besonders zweckmäßig, wenn die Koppeleinrichtung entweder der Drehwelle zugeordnet ist und die Dämpfungseinrichtung mit dieser koppelt, um die Dämpfungskraft auf die Drehwelle auszuüben, oder der Abstützung zugeordnet ist und die Dämpfungseinrichtung mit dieser koppelt, um die Gegenkraft abzustützen. Bevorzugt ist die Dämpfungseinrichtung mit der Drehwelle in die Aufnahme aufgenommen. Die erste elastische Kraftspeichereinrichtung könnte in einer zweiten Aufnahme des beweglichen Elements angeordnet sein, wie aus der DE 10 2014 225 036 A1 / US 9,463,846 B2 als solches bekannt. Demgegenüber ist aber eine solche Ausgestaltung bevorzugt, bei der die erste elastische Kraftspeichereinrichtung und die Dämpfungseinrichtung mit der Drehwelle in die Aufnahme aufgenommen sind. Diese Komponenten können mit dem erfindungsgemäßen Deckelelement zu einer Baueinheit integriert sein, die in die Aufnahme des beweglichen Elements aufnehmbar bzw. aufgenommen ist und am beweglichen Element befestigt bzw. befestigbar ist.

Nach einer besonders bevorzugten Ausgestaltung entsprechend dem Erfindungsvorschlag nach dem ersten Aspekt der Erfindung ist die Koppeleinrichtung radial innerhalb der ersten elastischen Kraftspeichereinrichtung innerhalb deren axialen Erstreckungsbereichs angeordnet, um eine axial kompakte Bauform zu erreichen. Die oben dargelegten Weiterbildungsvorschläge zum hinteren Umwerfer des ersten Aspekts der Erfindung sind dementsprechend zugleich auch Weiterbildungsvorschläge für den hinteren Umwerfer nach dem dritten Aspekt der Erfindung.

Ferner ist es sehr zweckmäßig und bevorzugt, wenn die erste elastische Kraftspeichereinrichtung über die Drehwelle an der Kettenführungsbaugruppe angekoppelt ist, um die Vorspannkraft über die Drehwelle auf die Kettenführungsbaugruppe auszuüben. Es ergeben sich die Vorteile des hinteren Kettenumwerfers nach dem zweiten Aspekt der Erfindung. Dementsprechend sind die vorstehend dargelegten Weiterbildungsvorschläge zum hinteren Umwerfer nach dem zweiten Aspekt der Erfindung zugleich auch Weiterbildungsvorschläge für den hinteren Umwerfer nach dem dritten Aspekt der Erfindung.

Die Erfindung wird im Folgenden anhand von in den Figuren gezeigten exemplarischen, nur als nicht beschränkende Beispiele dienenden Ausführungsformen näher erläutert.
- Fig. 1: zeigt ein exemplarisches Fahrrad mit einem erfindungsgemäßen hinteren Umwerfer einer Kettenschaltung des Fahrrads.
- Fig. 2: zeigt einen hinteren Kettenumwerfer gemäß einem ersten Ausführungsbeispiel in einer perspektivischen seitlichen Ansicht.
- Fig. 3: zeigt eine Schnittansicht des beweglichen Elements (P-Knuckle) des Umwerfers der Fig. 2 gemäß einer radialen Schnittebene.
- Fig. 4: zeigt eine weitere Schnittansicht des beweglichen Elements des Umwerfers der Fig. 2 gemäß einer axialen Schnittebene.
- Fig. 5: zeigt eine Explosionsansicht des beweglichen Elements (P-Knuckle) mit darin und daran angeordneten Komponenten einschließlich den Komponenten einer Feder-Dämpfer-Einrichtung des ersten Ausführungsbeispiels.
- Fig. 6: zeigt eine Explosionsansicht einer Freilaufkupplung, einer Stützhülse und eines Gehäusedeckels samt einer Drehwelle der Feder-Dämpfer-Einrichtung des ersten Ausführungsbeispiels.
- Fig. 7: zeigt eine weitere Explosionsansicht des als Gehäuse dienenden beweglichen Elements (P-Knuckle), des Gehäusedeckels, der Drehwelle, einer äußeren Käfigplatte einer Kettenführungsbaugruppe und weiterer Komponenten des ersten Ausführungsbeispiels.
- Fig. 8: zeigt eine weitere Explosionsansicht des Gehäuses, einer von dem Deckel, der Drehwelle und den Komponenten der Feder-Dämpfer-Einrichtung gebildeten Baueinheit, der äußeren Käfigplatte und weiterer Komponenten des ersten Ausführungsbeispiels.
- Fig. 9: zeigt die Käfigplatte und die Baueinheit der Fig. 8 in einem zu einer übergeordneten Baueinheit zusammengefügten Zustand.
- Fig. 10: zeigt eine Baueinheit eines hinteren Umwerfers gemäß einem zweiten Ausführungsbeispiel, die in einer Aufnahme eines als Gehäuse fungierenden beweglichen Elements (P-Knuckle) aufzunehmen ist und die Drehwelle, einen Gehäusedeckel und weitere Komponenten einer Feder-Dämpfer-Einrichtung enthält.
- Fig. 11: zeigt eine axiale Draufsicht auf den Gehäusedeckel der Fig. 10 gemäß der Sichtrichtung A in Fig. 10.
- Fig. 12: zeigt eine axiale Draufsicht auf ein teller- oder flanschartiges Koppelglied der Feder-Dämpfer-Einrichtung gemäß der Sichtrichtung B in Fig. 10.
- Fig. 13: zeigt die Baueinheit der Fig. 10 im in der Aufnahme des beweglichen Elements (P-Knuckle) aufgenommenen und daran befestigten Zustand samt einem Abschnitt des Kettenkäfigs gemäß einer radialen Schnittebene.
- Fig. 14: zeigt eine im Wesentlichen der Fig. 13 entsprechende radiale Schnittansicht des beweglichen Elements (P-Knuckle) mit einem Bereich des Kettenkäfigs.
- Fig. 15: zeigt eine axiale Draufsicht auf das bewegliche Element (P-Knuckle) samt dem Kettenkäfig der Fig. 14.
- Fig. 16: zeigt in Teilfigur a) eine radiale Schnittansicht eines beweglichen Elements (P-Knuckle) gemäß einer vorbekannten Ausführungsform und in Teilfigur zum Vergleich eine radiale Schnittansicht im Wesentlichen entsprechend Fig. 13 des beweglichen Elements (P-Knuckle) des zweiten Ausführungsbeispiels.
- Fig. 17: ist eine vergrößerte Darstellung der radialen Schnittansicht des beweglichen Elements (P-Knuckle) der vorbekannten Ausführungsform der Fig. 16 a).
- Fig. 18: zeigt eine Schnittansicht eines beweglichen Elements (P-Knuckle) eines dritten Ausführungsbeispiels gemäß einer radialen Schnittebene.

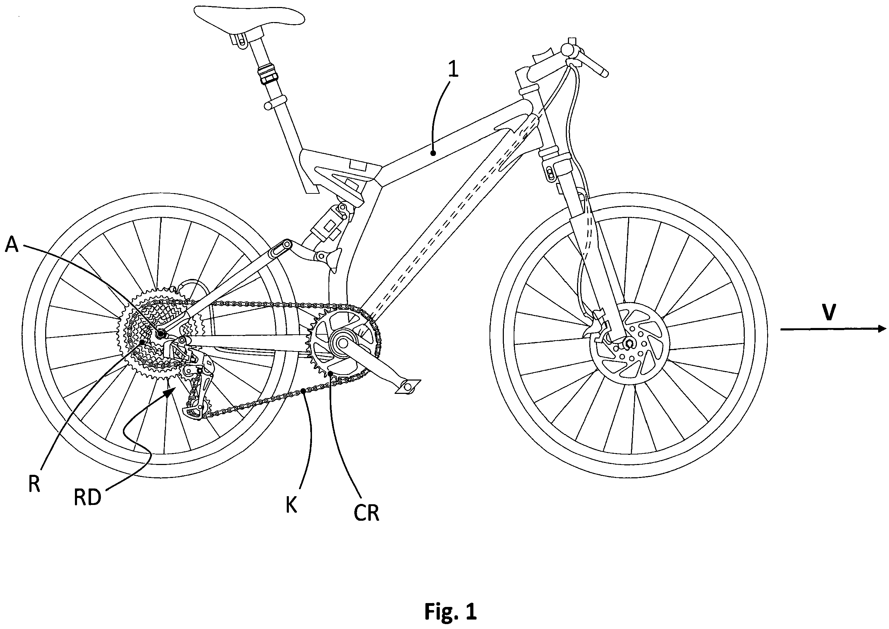

Figur 1 zeigt exemplarisch ein Fahrrad mit einem an sich üblichen Fahrradantrieb. Der Fahrradantrieb umfasst ein vorderes Kettenrad CR, ein hinteres Ritzelpaket R und eine Kette K, die mittels des hinteren Umwerfers RD von einem Ritzel zum nächsten bewegt werden kann. Die im Folgenden verwendeten Richtungsangaben rechts/links und vorne/hinten beziehen sich auf ein Fahrrad in Fahrtrichtung, entsprechen also der Fahrerperspektive auf dem Fahrrad. Der Fahrradrahmen 1 hat typischerweise ein linkes und ein rechtes hinteres Ausfallende oder Rahmenauge, zwischen denen das Hinterrad montiert ist. Das Hinterrad dreht sich zusammen mit dem Ritzelpaket R um die Hinterradachse A. Axial bezieht sich auf die Hinterradachse A bzw. die Drehachse A der Mehrfach-Ritzelanordnung R oder eine hierzu parallele Richtung, oder die Drehachse einer einen Kettenkäfig des hinteren Umwerfers am beweglichen Element (P-Knuckle) lagernden Drehwelle. Das größte Ritzel liegt axial weiter innen als die kleineren Ritzel. Die Zähne sind radial außen an den Ritzeln angeordnet. Das hier gezeigte Schaltwerk RD ist auf herkömmliche Weise mit einem Schaltauge am rechten Ausfallende des Rahmens befestigt. Der Schwenkmechanismus des hinteren Umwerfers ist als Schrägparallelogramm ausgeführt.

Ohne Beschränkung der Allgemeinheit ergeben sich zur Erläuterung der Erfindung dienende bevorzugte Ausführungsformen des hinteren Umwerfers nach der Erfindung aus der folgenden Beschreibung und den darin in Bezug genommenen Figuren. In dieser Beschreibung werden sich teilweise an die Bezugszeichen in der Beschreibung der DE 10 2014 225 036 A1 / US 9,463,846 B2 angelehnte Bezugszeichen für entsprechende oder analoge Komponenten und Elemente verwendet, die in den Einer- und Zehner-Stellen der als Bezugszeichen verwendeten Bezugszahlen mit den Bezugszeichen der DE 10 2014 225 036 A1 / US 9,463,846 B2 korrespondieren.

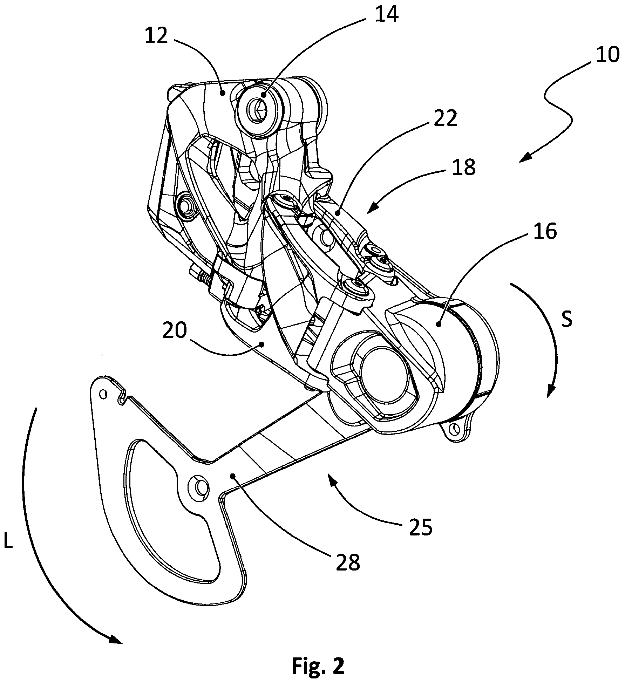

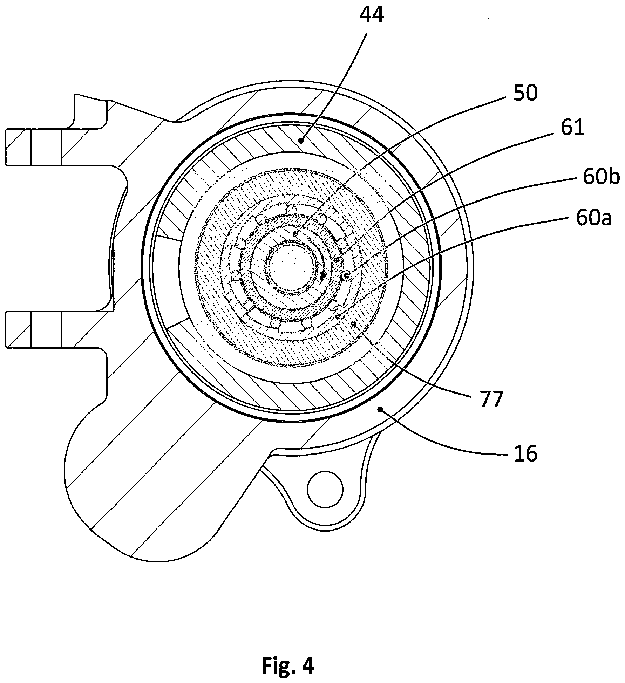

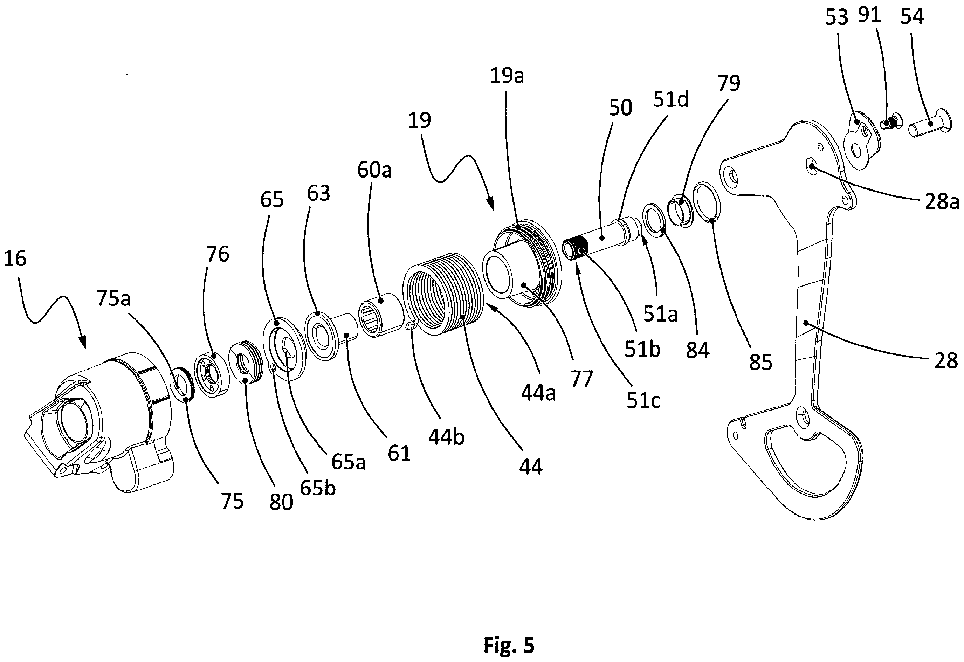

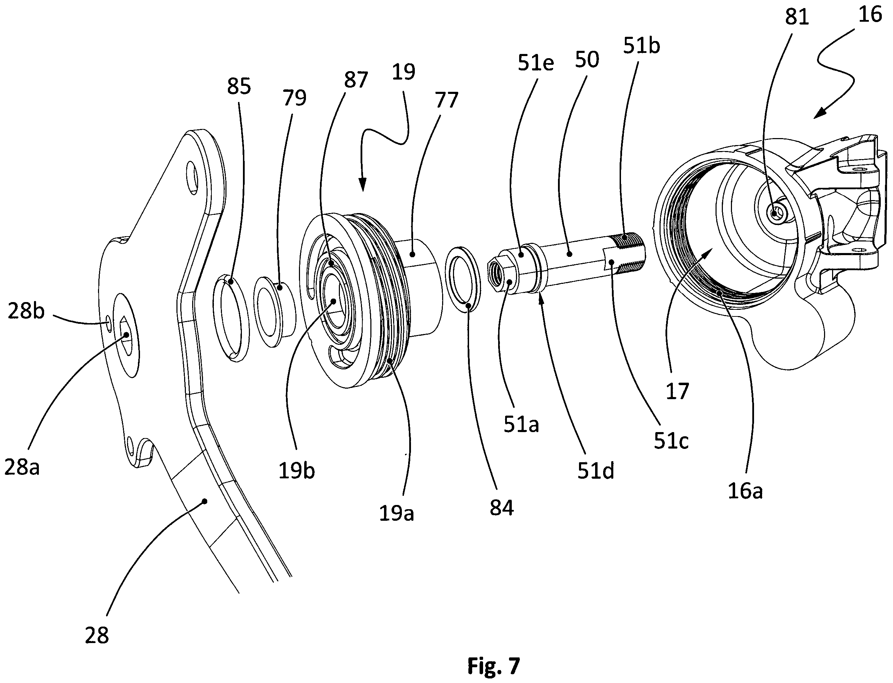

Ein erstes Ausführungsbeispiel für einen erfindungsgemäßen Fahrradumwerfer, der eine Dämpferbaugruppe gemäß einem ersten konstruktiven Ansatz enthält, ist in den Figuren 2 bis 5 und 7 bis 9 in verschiedenen Ansichten gezeigt.

Der hintere Fahrradumwerfer 10 weist ein sogenanntes Basiselement (B-Knuckle) 12 und eine vorliegend als Parallelogramm ausgeführte Schwinge 18 auf, die beispielsweise mit zwei Verbindungselementen 20 und 22 ausgeführt ist, die drehbar mit Befestigungsabschnitten des Basiselements 12 verbunden sind. Ein sogenanntes bewegliches Element (P-Knuckle) 16 ist an einem dem Basiselement 12 entgegengesetzten Endbereich der Schwinge 18, hier an zu dem Basiselement 12 entgegengesetzten Enden der Verbindungselemente 20 und 22, mit der Schwinge verbunden, so dass das bewegliche Element mittels der Schwinge 18 auf an sich bekannte Art und Weise in seitlicher Richtung relativ zu einem Fahrradrahmen bewegbar ist, um mittels einer in Fig. 2 durch eine Käfigplatte 28 repräsentierte Kettenführungsanordnung oder Kettenführungsbaugruppe 25 die Kette einer Kettenschaltung zwischen Ritzeln eines Ritzelsatzes des hinteren Laufrads des Fahrrads umzuwerfen.

Das Basiselement 12, das auch als "B-Knuckle" bekannt ist, kann an einem Fahrradrahmen 1 beispielweise mittels eines Befestigungselements 14, zum Beispiel einer Schraube, angebracht werden. Ein Paar von Drehzapfen, die als Bolzen ausgeführt sein können, verbinden das Basiselement 12 mit der Schwinge 18.

Die Schwinge 18 enthält ein schon angesprochenes äußeres Verbindungselement 20 und ein schon angesprochenes inneres Verbindungselement 22. Ferner kann die Schwinge 18 mindestens ein in Fig. 2 nicht erkennbares Vorspannelement, zum Beispiel in Form einer Feder, enthalten, um den Umwerfer 10 in Richtung einer Anfangs-Wegposition festzuspannen, wie im Fachgebiet allgemein bekannt ist. Im Falle eines elektrisch betätigten Umwerfers braucht ein solches Vorspannelement hingegen nicht vorgesehen sein.

Das bewegliche Element 16, das auch als "P-Knuckle" bekannt ist, ist über ein Paar von weiteren Drehzapfen auf ähnliche Weise wie das Basiselement 12 an der Schwinge schwenkbar angebracht. Es sind im Prinzip beliebige Mittel zur Kopplung des beweglichen Elements 16 mit dem Basiselement 12 im Rahmen der Erfindung vorstellbar.

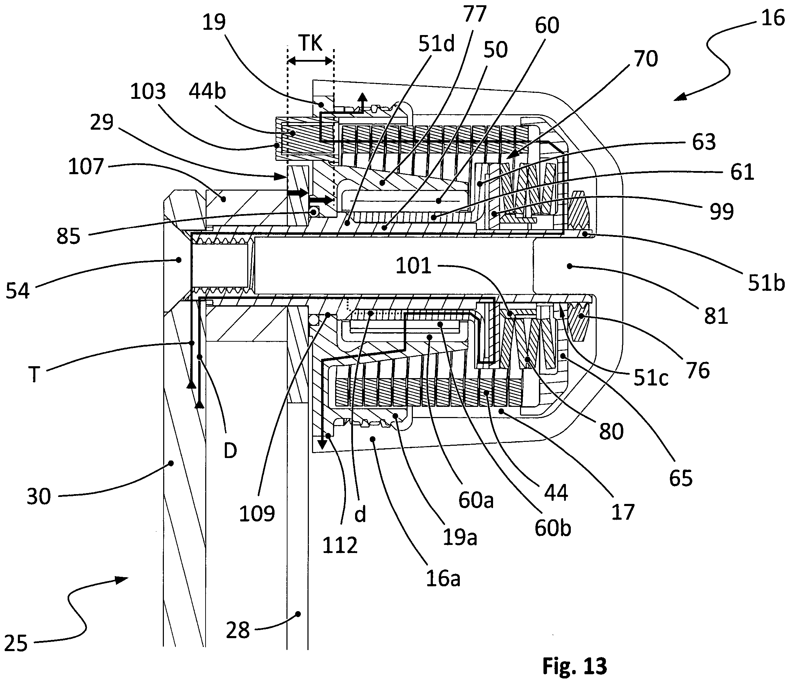

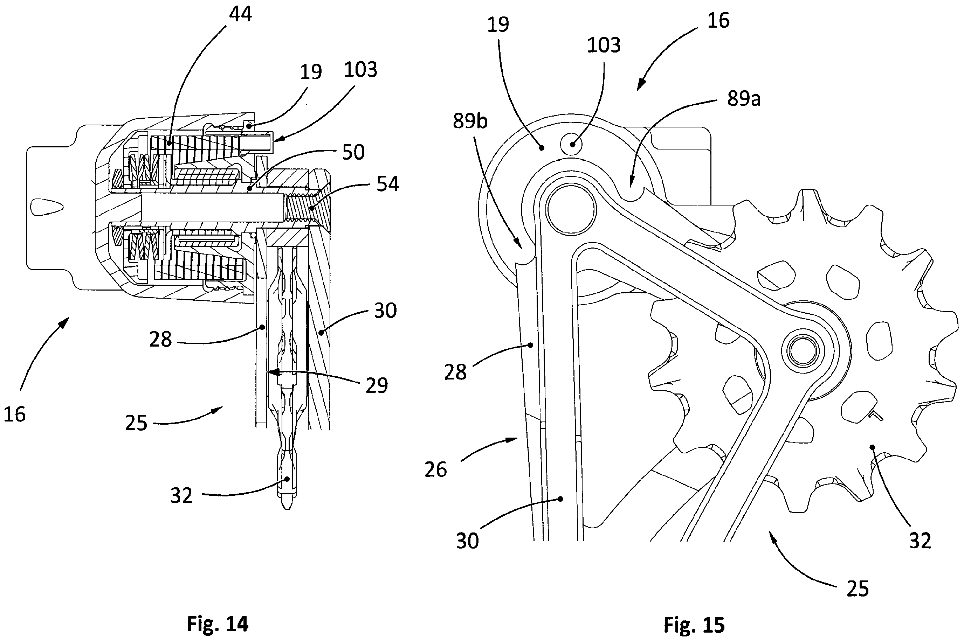

Die Kettenführungsbaugruppe 25 kann eine auch als Kettenkäfig bekannte Kettenführung 26 (vgl. Figuren 14 und 15 zum zweiten Ausführungsbeispiel) enthalten, vorzugsweise mit einem Paar von beabstandeten Käfigplatten, der in Fig. 2 gezeigten äußeren Käfigplatte 28 und einer inneren Käfigplatte (vgl. die innere Käfigplatte 30 der Figuren 13 bis 15 zum zweiten Ausführungsbeispiel). Zwischen den beiden Käfigplatten kann ein Paar von Führungsrädern zum Führen einer nicht dargestellten Kette drehbar angeordnet sein, nämlich ein oberes Führungsrad (vgl. das auch als Leitrolle bekannte obere Führungsrad 32 der Figuren 14 und 15 zum zweiten Ausführungsbeispiel) und ein unteres Führungsrad.

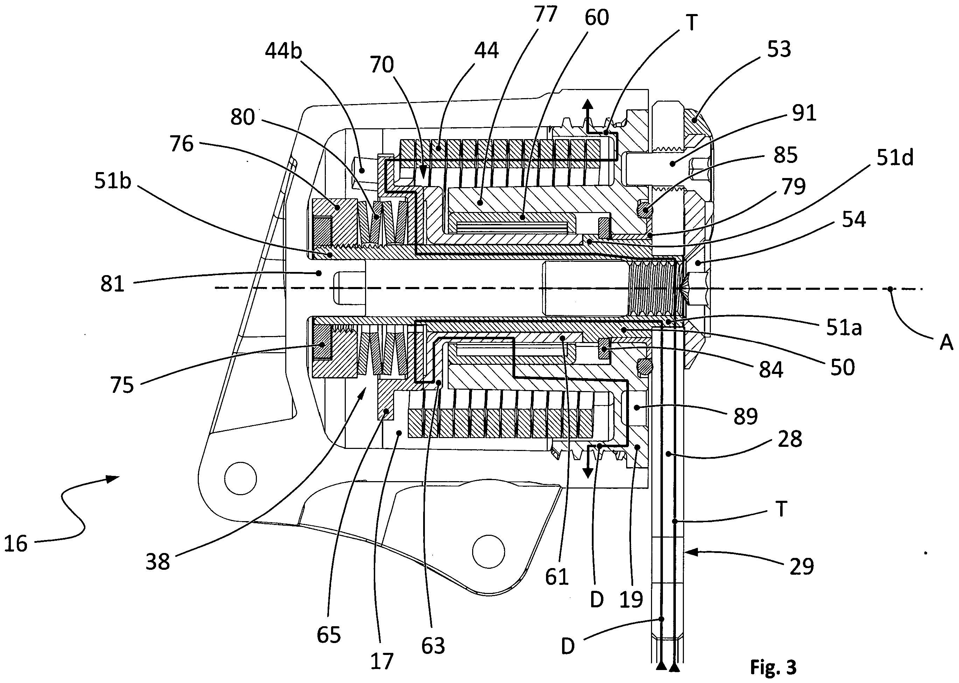

Die Kettenführungsbaugruppe 25 ist drehbar am beweglichen Element 16 angebracht und mittels einer Vorspannfederanordnung, vorliegend in Form einer als Schraubenfeder ausgeführten Torsionsfeder 44 (vgl. Figur 3) in einer Kettenspannrichtung vorgespannt.

Der Umwerfer 10 enthält im beweglichen Element 16 eine Dämpferbaugruppe 38, die eine Rotationsbewegung der Kettenführungsbaugruppe 25 relativ zum beweglichen Element 16 in einer zur Kettenspannrichtung entgegengesetzten Drehrichtung dämpft. Mit dem Begriff Dämpferbaugruppe ist hier eine Einrichtung angesprochen, die auch als "Gegenkrafterzeugungseinrichtung" bezeichenbar ist und beim Ausführungsbeispiel eine Freilaufkupplungseinrichtung sowie eine Reibeinrichtung und eine der Reibeinrichtung zugeordnete oder zugehörige elastische Kraftspeichereinrichtung umfasst. Es kommen grundsätzlich völlig andersartige Dämpfungseinrichtungen in Betracht. Mittels der Dämpfungseinrichtung 38 ist auf die Kettenführungsbaugruppe eine einer Drehung in einer der Kettenspannrichtung (erste Drehrichtung) entgegengesetzten Drehrichtung (zweite Drehrichtung) relativ zu dem beweglichen Element entgegenwirkende, als Dämpfungskraft wirkende Gegenkraft ausübbar.

Eine Vorwärtsrichtung V (vgl. Fig. 1) entspricht der Vorwärtsrichtung eines eine Kettenschaltung mit dem Umwerfer aufweisenden Fahrrads. Eine Schwenkrichtung der Kettenführungsbaugruppe 25 mit einer Bewegungskomponente entgegengesetzt zur Vorwärtsrichtung V, in der die geführte Kette gespannt wird, ist in Fig. 2 mit S bezeichnet. Die zu dieser Kettenspannrichtung S entgegengesetzte Schwenkrichtung mit einer Bewegungskomponente in der Vorwärtsrichtung V ist in Fig. 2 mit L bezeichnet. Ein Verschwenken der Kettenführungsbaugruppe 25 in dieser Schwenkrichtung L kann eine unerwünschte Reduzierung der Kettenspannung zur Folge haben, gegebenenfalls mit der Gefahr, dass die so gelockerte Kette von dem Ritzelpaket abspringen könnte.

Figur 3 zeigt, wie die (äußere) Käfigplatte 28 der Kettenführung 26 mit einer im beweglichen Element 16 in einer Aufnahme 17 drehbar gelagerten Drehwelle 50 drehfest verbunden ist. Ein nicht rotationssymmetrischer, vorliegend als Mehrkant ausgeführter Koppelabschnitt 51a der Drehwelle greift in eine komplementär geformte Koppelöffnung 28a der Käfigplatte 28 ein, so dass die Drehwelle 50 drehfest mit der Käfigplatte verbunden ist. Eine durch eine Öffnung einer Unterlegscheibe 53 hindurchgreifende Axialschraube 54 ist in eine axiale Schrauböffnung des Koppelabschnitts 51a eingeschraubt, um die Käfigplatte 28 mit der vorzugsweise über ihre ganze Länge hohl ausgeführten Drehwelle 50 fest zu verbinden.

Die Dämpferbaugruppe oder Dämpfungseinrichtung 38 enthält eine Koppeleinrichtung in Form einer Einweg- oder Freilaufkupplung, nämlich in Form einer sogenannten Rollenkupplung 60 üblicher Bauart, mit einem inneren Kupplungselement 61 und einem äußeren Kupplungselement 60a und zwischen diesen wirksamen Rollelementen 60b. Das innere Kupplungselement ist vorliegend von einer drehbar auf der Drehwelle 50 angeordneten Laufbuchse 61 gebildet. Die Laufbuchse weist an einem von der Käfigplatte 28 abgewandten Endabschnitt einen eine axial gerichtete Reibfläche bereitstellenden Friktionsflansch 63 auf, der mit einem Friktionsabschnitt eines axial benachbarten Elements 65 einer Reibeinrichtung 70 zugehörig ist. Hierzu weist das auch zur Ankoppelung der als Torsionsfeder ausgeführten Vorspannfeder 44 an der Drehwelle 50 dienende, deshalb im Folgenden als Koppelglied 65 bezeichnete Element 65 an seinem Friktionsabschnitt eine Gegen-Reibfläche auf, die mit der ringförmigen Reibfläche des Friktionsflansches 63 reibschlüssig eingreift.

Der reibschlüssige Eingriff der beiden Reibflächen wird von der Vorspannkraft eines Tellerfederpakets 80 bestimmt, welches zwischen dem auf der Drehwelle 50 im Prinzip axial beweglich angeordneten Koppelglied 65 und einem auf einen ein Außengewinde aufweisenden inneren Endabschnitt 51b der Drehwelle 50 aufgeschraubten Einstellelement 76 eingespannt. Das Einstellelement 76 wird bei der Herstellung in eine eine gewünschte Vorspannung ergebende Soll-Position geschraubt, um ein gewünschtes Reibmoment und damit eine gewünschte Dämpfungskraft einzustellen, und dann vorzugsweise in dieser Soll-Position gesichert, beispielsweise durch Verstemmen mit einem an der Drehwelle drehfest angeordnetem Sicherungsglied 75. Vorliegend ist das Sicherungsglied in eine Aussparung des Einstellelements 76 aufgenommen und an einer Rändelung am Außenumfang mit einem Innenumfang der Aussparung verstemmt. Das ringförmige Sicherungsglied 75 steht an einer von der Rotationssymmetrie abweichenden Koppelformation 75a, hier einer Abflachung, an seinem Innenumfang mit einer komplementären Gegenkoppelformation, hier einer Abflachung 51c, am Endabschnitt 51b der Drehwelle 50 in Eingriff, so dass das Sicherungsglied drehfest auf der Drehwelle sitzt und damit das Einstellelement 76 gegen Verdrehen sichert.

Das Koppelglied 65 ist drehfest auf der Drehwelle 50 angeordnet. Hierzu steht das Koppelglied 65 an einer von der Rotationssymmetrie abweichenden Koppelformation, hier einer Abflachung 65a, an seinem Innenumfang mit einer komplementären Gegenkoppelformation, hier der Abflachung 51c an der Drehwelle 50, in Eingriff. Somit kann die Dämpferbaugruppe 38 über die Drehwelle 50 eine Dämpfungskraft auf die Käfigplatte 28 und damit die gesamte Kettenführungsbaugruppe 25 ausüben.

Die Rollenkupplung 60 ist an dem äußeren Kupplungselement 60a in einer in Bezug auf das bewegliche Element 15 stationären hülsenförmigen Halterung 77 beispielweise im Presssitz drehfest gehalten und damit mittelbar gegen Verdrehung am beweglichen Element (P-Knuckle) 16 abgestützt. Die Halterung 77 ist vorliegend von einem in eine Aufnahme 17 des beweglichen Elements 16 axial vorstehenden Abschnitt eines die Aufnahme in Richtung zur Käfigplatte 28 verschließenden, dieser unmittelbar benachbarten Deckelelements 19 gebildet. Das beispielsweise aus Kunststoff hergestellte, auch als Deckel oder Gehäusedeckel ansprechbare Deckelelement 19 kann mehrteilig ausgeführt sein, ist vorliegend und bevorzugt aber einteilig ausgeführt. Das Deckelelement 19 kann formschlüssig, reibschlüssig oder stoffschlüssig am beweglichen Element 16 festgelegt sein. Vorliegend ist eine formschlüssige Schraubverbindung mittels vorzugsweise mehrgängiger Gewindeformationen 19a und 16a an einem Außenumfang des Deckelelements 19 und einem Innenumfang des beweglichen Elements (P-Knuckle) 16 in einem äußeren Endbereich der Aufnahme 17 realisiert.

Wie erwähnt, ist das Kupplungselement 60a und damit die gesamte Rollenkupplung 60 in der Haltung 77 des Deckelelements 19 drehfest gehalten. Anstelle eines Presssitzes oder einer Presspassung kommt auch eine formschlüssige Kopplung mit der Halterung 77 in Betracht.

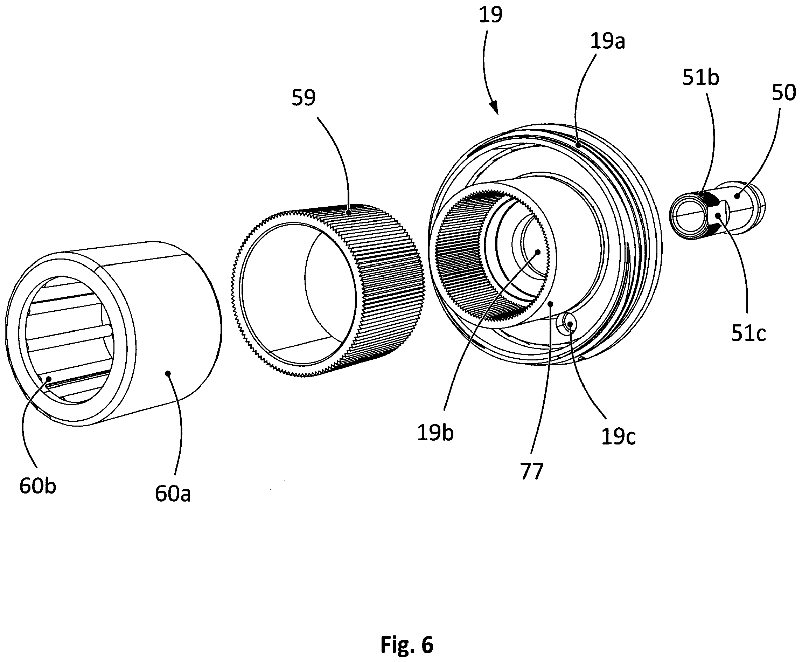

Gemäß einer in Fig. 6 gezeigten Variante ist das äußere Kupplungselement 60a der Rollenkupplung 60 in eine Stahlhülse 59 eingepresst, also im Presssitz gehalten, die am Außenumfang eine Halteformation etwa in der Art einer Rändelung aufweist, welche mit einer Gegen-Halteformation etwa in der Art einer Rändelung am Innenumfang der hülsenförmigen Halterung 77 formschlüssig eingreift. Man kann auch vorsehen, dass die Stahlhülse 59 in die Halterung 77 eingepresst ist oder dass die Halterungshülse 77 durch Umspritzen der Stahlhülse 59 beim Herstellen des Deckelelements 19 durch ein Spritzgussverfahren hergestellt wird. Angemerkt sei, dass das Deckelelement auch aus Metall, beispielsweise aus Aluminium hergestellt sein kann. In solch einem Fall ist eine zusätzliche Verstärkungshülse wie die Stahlhülse 59 regelmäßig entbehrlich.

Das Deckelelement 19 weist eine Öffnung 19b auf, in die ein Lagerabschnitt 51e der Drehwelle 50 eingreift, von dem der Koppelabschnitt 51a vorsteht und in die Koppelöffnung 28a der Käfigplatte 28 eingreift. Der Lagerabschnitt 51e bildet mit einem die Öffnung 19b begrenzenden Innenumfang des Deckelelements 19 ein Drehlager für die Drehwelle, wobei vorzugsweise noch eine Lagerbuchse 79 zwischen dem Lagerabschnitt 50e und diesem Innenumfang des Deckelelements 19 wirksam ist, um ein reibarmes Gleitlager zu bilden. Dies kann besonders Sinn machen, wenn das Deckelelement 19 aus Metall, etwa Aluminium, hergestellt ist. Ist das Deckelelement 19 aus Kunststoff hergestellt, ist eine solche Lagerbuchse regelmäßig entbehrlich.

Ein weiteres Drehlager für die Drehwelle 50 ist von einem mit dem beweglichen Element 16 einteiligen, von einem dem Deckelelement 19 entgegengesetzten Wandabschnitt axial in die Aufnahme 17 vorstehenden Zapfen 81 und dem als Lagerhülse dienenden Endabschnitt 51b der Drehwelle 50 gebildet, in die der Zapfen 81 eingreift. Es kann eine zusätzliche Lagerbuchse vorgesehen werden, um ein reibarmes Gleitlager zu realisieren. Dies kann besonders Sinn machen, wenn das Deckelelement 19 aus Metall, etwa Aluminium, hergestellt ist.

Die beiden so gebildeten Gleitlager haben bezogen auf die axiale Abmessung des beweglichen Elements 16 einen sehr großen oder gar maximalen Abstand, was für eine definierte Drehlagerung der Drehwelle 50 und der damit gekoppelten Komponenten sorgt. Die Drehwelle ist also einerseits mittels des Zapfens 81 direkt an dem aus Kunststoff oder Metall, etwa Aluminium, hergestellten Körper des beweglichen Elements 16 gelagert und anderseits indirekt an dem beweglichen Element 16 gelagert, vermittels des Deckelelements 19. Die Drehlagerung am Deckel hat aber vorzugsweise eine solche Beschaffenheit etwa eine geeignete axiale Ausdehnung oder/und Durchmesserabstufung im Bereich der Drehwelle, beispielsweise mittels des Ringbunds 51d und der Distanzscheibe 84, dass die Drehwelle 50 auch schon alleine durch diese deckelseitige Drehlagerung in einer definierten, axial von dem Deckelelement sich in die Aufnahme 17 erstreckenden Stellung gehalten wird, sodass das Deckelelement mit der Drehwelle, der äußeren Käfigplatte 28 und weiteren Komponenten eine vormontierte Baueinheit bilden kann, die dann mit dem eine Art Gehäuse bildenden beweglichen Element 16 kombiniert werden kann.

Die Rollenkupplung 60 ist derart konfiguriert, dass die der Kettenspannrichtung S entsprechende Drehrichtung der Drehwelle 50 die Freilaufdrehrichtung der Rollenkupplung ist, in der sich das innere Kupplungselement 61 ungehindert relativ zum äußeren Kupplungselement 60a drehen kann. Das über die Reibeinrichtung 70 mit der Drehwelle 50 reibschlüssig gekoppelte innere Kupplungselement 61 kann sich somit mit der Drehwelle in der Kettenspannrichtung S mitdrehen, ohne dass dieser Verdrehung entgegenwirkende, von der Dämpfungseinrichtung 38 ausgeübte Dämpfungskräfte auftreten. Die Kettenführungsbaugruppe 25 kann sich somit frei in dieser Drehrichtung drehen.

Die der der Kettenspannrichtung S entgegengesetzte Schwenkrichtung L entspricht hingegen der Sperrrichtung der Rollenkupplung 60, in der eine Verdrehung des inneren Kupplungselements 61 relativ zum äußeren Kupplungselement 60a der Rollenkupplung gesperrt ist. Somit kann sich die Drehwelle 50 und damit die Kettenführungsbaugruppe 25 in dieser Richtung nur drehen unter entsprechender relativer Verdrehung des drehfest an der Drehwelle 50 gehaltenen Koppelglieds 65 relativ zum stationär verbleibenden inneren Kupplungselement 61 der Rollenkupplung 60, so dass die in gegenseitigem Reibeingriff stehenden Reibflächen der Reibeinrichtung 70 gegeneinander verdrehen und über das Koppelglied 65 eine dieser Verdrehung entgegenwirkende Gegenkraft auf die Drehwelle 50 und damit die Kettenführungsbaugruppe 25 ausgeübt wird, die Dämpfungskraft der Dämpfungseinrichtung 38.

Die Rollenkupplung 60 kann vorteilhaft von einem sogenannten Hülsenfreilauf gebildet sein, einem hülsenartigen Element 60a, an dessen Innenumfang die Rollelemente 60b gehalten sind und das mit der als inneres Kupplungselement dienenden Laufbuchse 61 kombiniert ist.

Bei den herkömmlichen Lösungen gemäß der DE 10 2014 025 036 A1 / US 9,463,846 B2 ist die die Kettenführungsbaugruppe 25 in der Schwenkrichtung S vorspannende Kraftspeichereinrichtung, hier eine Torsions-Schraubenfeder, einerseits unmittelbar am Körper des beweglichen Elements (P-Knuckle) formschlüssig abgestützt und anderseits direkt mit der äußeren Käfigplatte der Kettenführungsbaugruppe bzw. einer damit drehfest verbundenen Zwischenscheibe gekoppelt, um direkt die Vorspannkraft auf die Kettenführungsbaugruppe auszuüben. Beim dargestellten Ausführungsbeispiel ist demgegenüber die Kraftspeichereinrichtung in Form der Torsionsfeder 44 einerseits mit einem Federende 44a in einer nach außen geschlossenen Vertiefung 19c des Deckelelements 19 abgestützt und greift an ihren anderen Federende 44b in eine Öffnung 65b des Koppelglieds 65 ein, um ihre Vorspannkraft über das auf der Drehwelle 50 drehfest sitzenden Koppelglied 65 und die Drehwelle 50 auf die äußere Käfigplatte 28 und damit die Käfigführungsbaugruppe zu übertragen.

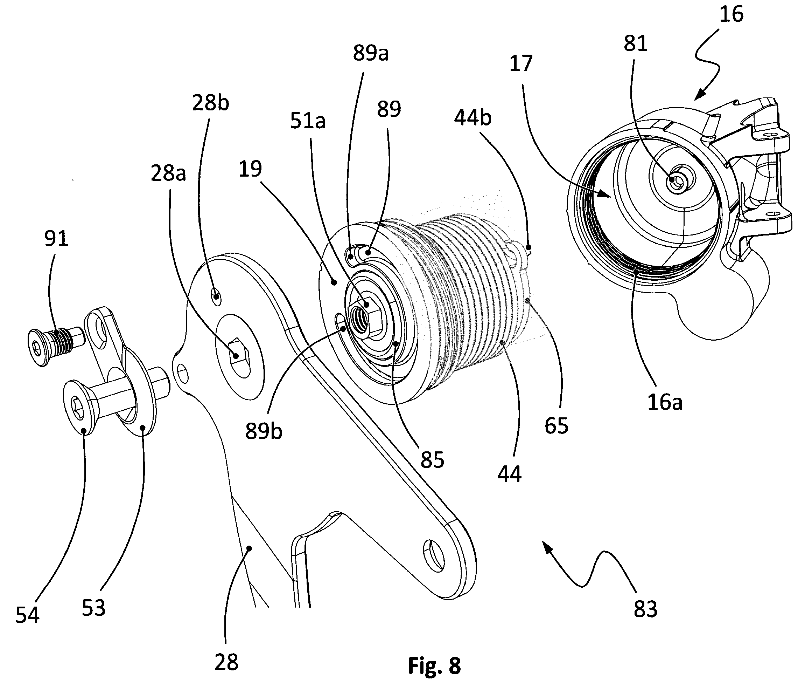

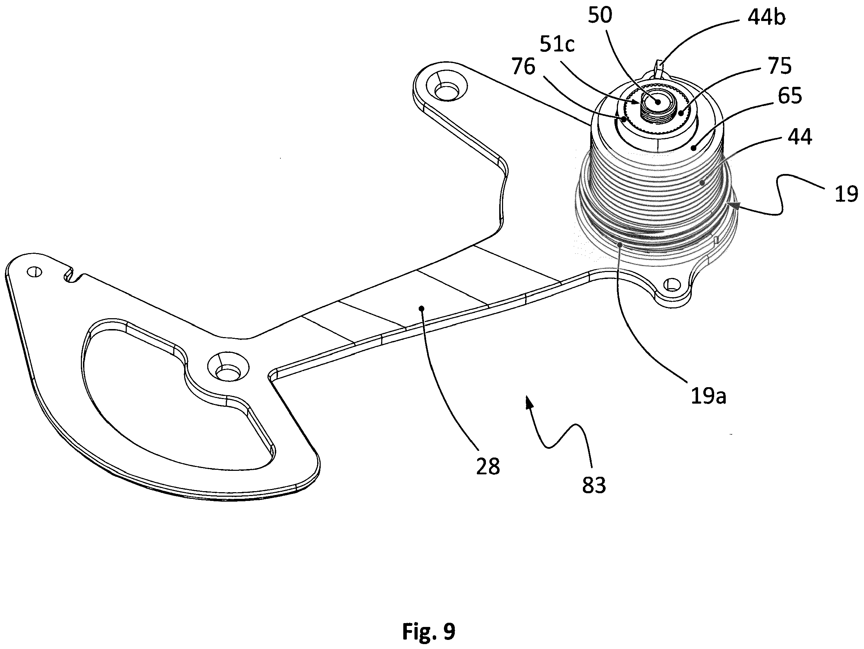

Somit kann die Torsionsfeder 44 mit dem Deckelelement 19, dem Koppelglied 65, der zwischen dem Koppelglied 65 und dem Einstellelement 76 eingespannten Kraftspeichereinrichtung in Form der Tellerfederanordnung 80, der Schraubensicherung 75 und dem Rollenfreilauf 60 einschließlich der Dämpfer-Laufbuchse 61 und noch einigen weiteren, im Folgenden noch zu erwähnenden Komponenten eine außerhalb der Aufnahme 17 des beweglichen Elements 16 vormontierbare Baueinheit bilden, wie in Figur 8 zu erkennen. Auch die drehfest an der Drehwelle zu montierende äußere Käfigplatte 28 kann zu dieser Baueinheit 83 gehören, wie in Fig. 9 veranschaulicht. Damit kann auch die gesamten Kettenführungsbaugruppe 25 zu dieser Baueinheit 83 gehören, wenn dies gewünscht ist. Die Ausführung dieser Komponenten als modulare Unterbaugruppe ist ein wesentlicher Vorteil der beschriebenen Ausführungsform, da die Montage wesentlich erleichtert wird.

Diese Unterbaugruppe bzw. Baueinheit kann hinsichtlich der Vorspannung der elastischen Kraftspeichereinrichtung der Reibeinrichtung, hier des Tellerfederpakets 80, außerhalb der Aufnahme 17 des beweglichen Elements (P-Knuckle) 16 mittels der Vorspannmutter 76 justiert werden, und diese Soll-Einstellung kann dann mittels der Schraubensicherung 75 oder auf andere Weise gesichert werden.

Ebenso kann die der Kettenführungsbaugruppe 25 zugeordnete elastische Kraftspeichereinrichtung, hier die Torsionsfeder 44, außerhalb der Aufnahme 17 im Zuge des Zusammenbaus dieser Baueinheit 83 hinsichtlich ihrer Vorspannung justiert werden, beispielsweise unter Ausnutzung eines zwischen der Käfigplatte 28 und dem Deckelelement 19 vorgesehenen Rotationsanschlags 89a, der eine Art Nullstellung für die Kettenführungsbaugruppe 25 definiert, wie im Folgenden noch näher beschrieben.

Anschließend kann dann diese Baueinheit mit dem beweglichen Element 16 kombiniert werden, in dem das Deckelelement 19 mit seinem Außengewinde 19a in das Innengewinde 16a des beweglichen Elements 16 eingeschraubt wird, unter Aufschieben des als Gleitlagerhülse dienenden Endabschnitts 51b der Drehwelle 50 auf den Lagerzapfen 81 des beweglichen Elements. Der Innenumfang dieses als Lagerhülse dienenden Endabschnitts 51b und der Außenumfang des Lagerzapfen 81 bilden dann Gleitlagerflächen des so gebildeten Gleitlagers.

Bei der beschriebenen Konstruktion sind die vom Tellerpaket ausgeübten axialen Vorspannkräfte ohne Mitwirkung des beweglichen Elements 16 einerseits mittels der Vorspannmutter 76 und andererseits über das Koppelglied 65 und die Laufbuchse 61 an der Drehwelle 50 abgestützt. Zur Abstützung über die Laufbuchse 61 weist die Drehwelle einen radial vorstehenden Ringbund 51d auf, an dem die Laufbuchse 61 mit einer ringförmigen Endfläche eingreift. Eine axiale Ringfläche des Ringbunds und die axiale Endfläche der Laufbuchse 61 bilden ein weiteres Paar von Reibflächen, die der Reibeinrichtung 70 der Dämpfungseinrichtung 38 zugehörig sind. Anstelle axial gerichteter Ringflächen am Ende der Laufbuchse 61 und am Ringbund kann man auch im Querschnitt schräg verlaufende Reibflächen vorsehen, um einerseits die Flächeninhalte der Reibflächen zu vergrößern und andererseits eine Zentrierungsfunktion bereitzustellen.

Gemäß Vorstehendem wird die Vorspannkraft des Tellerfederpakets 80 über eine die Reibflächen der Reibeinrichtung umfassende Abstützanordnung, enthaltend das Koppelglied 65 und die Laufbuchse 61, an der Drehwelle 50 abgestützt. Das radial äußere Kupplungselement 60a der Rollenkupplung 60 wird dabei nicht mit axialen Kräften belastet. Auch auf das Deckelelement 19 werden dabei keine axialen Kräfte ausgeübt.

An seiner anderen axialen Seite dient der Ringbund 51d der Drehwelle 50 zur Abstützung an einem nach radial innen vorstehenden Flanschabschnitt des Deckelelements 19, welcher die Durchgangs- und Lageröffnung 19b begrenzt. Diese Abstützung kann mittels einer Distanzscheibe 84 erfolgen, wie in den Figuren dargestellt. Abgestützt wird eine durch Festziehen der Achsschraube 54 erzielte Befestigungskraft, wofür die genannten Komponenten einschließlich der Lagerbuchse 79 und der Käfigplatte 78 mit der Unterlegscheibe 53 aufeinander abgestimmt axial dimensioniert sind.

Zur Abdichtung des Innenraums bzw. der Aufnahme 17 des beweglichen Elements (P-Knuckle) ist vorzugsweise mindestens ein O-Ring oder dergleichen zwischen der Käfigplatte 28 und dem Deckelelement 19 oder/und zwischen dem Deckelelement 19 und der Drehwelle 50 angeordnet. Vorliegend ist ein O-Ring 85 in eine zugeordnete Ringnut 87 des Deckelelements 19 aufgenommen. Auch zwischen dem Deckelelement 19 und dem beweglichen Element 16 kann wenigstens ein O-Ring oder dergleichen angeordnet sein, beispielsweise zwischen einem Flanschabschnitt des Deckelelements 19 benachbart des Außengewindes 19a und einer Ringstufe am Innenumfang des beweglichen Elements 16 benachbart dem Innengewinde 16a. Der Gewindeeingriff zwischen dem Deckelelement und dem beweglichen Element kann aber schon für eine hinreichende Abdichtung des Innenraums des beweglichen Elements (P-Knuckle) ausreichen, insbesondere wenn das Deckelelement als Kunststoffteil ausgeführt ist.

Anzumerken ist, dass man auf die Abstandscheibe 84 und die Lagerbuchse 79 auch verzichten könnte. Die Lagerbuchse 79 ist insbesondere dann entbehrlich, wenn das Deckelelement aus Kunststoff hergestellt ist. Im Falle der Realisierung des Deckelelements aus Metall, insbesondere Aluminium, wird regelmäßig aber eine Lagerbuchse 79 oder ähnliches sinnvoll sein, um ein Gleitlager zu bilden. Der O-Ring 85 könnte auch axial außerhalb eines vom Außenumfang der Drehwelle 50 und dem Innenumfang des Deckelelements gebildeten Gleitlagers zwischen der Drehwelle und dem Deckelelement eingefügt sei.

Fig. 3 zeigt die Kraft- oder Momentflüsse der eine erste elastische Kraftspeichereinrichtung bildenden Torsionsfeder 44 und der Dämpfungseinrichtung 38 betreffend die über die Drehwelle 50 ausgeübte Vorspannkraft bzw. Dämpfungskraft. Eine erste Pfeillinie T zeigt den Kraftfluss, der von der auch als Käfigfeder bezeichenbaren Torsionsfeder 44 ausgeht. Der Kraftfluss verläuft von der Torsionsfeder 44 über das Koppelglied 65 auf die Drehwelle 50 und von dieser auf die Käfigplatte 28. Die diese Vorspannkraft entsprechende Gegenkraft stützt die Torsionsfeder 44 über das Deckelelement 19 am beweglichen Element (P-Knuckle) ab, vermittels der Gewindeanordnung 16a, 19a. Zweckmäßig kann man vorsehen, dass diese Gegenkraft im Sinne eines Anziehens des Gewindeeingriffs zwischen dem Außengewinde 19a des Deckelelements 19 und dem Innengewinde 16a des beweglichen Elements 16 wirkt. Dieser Gewindeeingriff wird somit durch die wirkende Gegenkraft zur auf die Kettenführungsbaugruppe 25 ausgeübten Vorspannkraft nicht gelockert, sondern festgezogen bzw. im festgezogenen Zustand gehalten.

Aufgrund der Anbindung der Torsionsfeder 44 axial innen an der Drehwelle 50 vermittels des Koppelglieds 65 und axial außen an dem beweglichen Element 16 vermittels des Deckelelements 19, ist die Torsionsfeder 44 mit einem zu den bekannten Lösungen der DE 10 2014 225 036 A1 / US 9,463,846 B2 entgegengesetzten Wickelsinn gewickelt. Aufgrund der stationären Abstützung am linken Federende 44a und der Anbindung des rechten Federendes 44b über die Drehwelle 50 an der Kettenführungsbaugruppe ist die Torsionsfeder 44 als links gewickelte Torsionsfeder ausgeführt, wo hingegen nach dem angesprochenen Stand der Technik eine rechts gewickelte Torsionsfeder verwendet wird, die am rechten Federende stationär abgestützt ist und am linken Federende an der Kettenführungsbaugruppe angekoppelt ist.

Eine zweite Pfeillinie D zeigt demgegenüber den von der Dämpfungseinrichtung 38 ausgehenden Kraftfluss, nämlich zum einen die auf die Käfigplatte 38 ausgeübte Dämpfungskraft, die nur im Falle einer Verdrehung der Käfigplatte 28 entgegen der Kettenspannrichtung auftritt. Es tritt dann zwischen den Reibflächen der Reibeinrichtung 70, speziell der axialen Ringreibfläche am Friktionsflansch 63 der Laufbuchse 61 und der zugeordneten Reibfläche am Koppelglied 65, eine relative Verdrehung statt. Wie dargelegt, blockiert die Rollenkupplung 60, sodass die Laufbuchse 61 durch die Rollenkupplung 60 in ihrer momentanen Drehstellung relativ zum Deckelelement 19 und damit dem beweglichen Element (P-Knuckle) 16 festgehalten wird. Das an der Drehwelle 50 drehfest gehaltene Koppelglied 65 kann sich somit nur gegen eine durch den Reibschluss der Reibflächen der Reibeinrichtung entstehende Dämpfungskraft verdrehen, die somit vom Koppelglied 65 über die Drehwelle 50 auf die Käfigplatte 28 ausgeübt wird. Zum anderen wird die mit dieser Dämpfungskraft korrespondierende Gegenkraft von der Laufbuchse 61 über die Rollen 60b und das äußere Kupplungselement 60a der Rollenkupplung 60 an der deckelseitigen Halterung 77 abgestützt, im Falle der Ausführungsvariante der Fig. 6 vermittels der Stahlhülse 59. Das Deckelelement stützt diese Gegenkraft zur Dämpfungskraft dann über die Gewindeanordnung 16a, 19a am beweglichen Element (P-Knuckle) 16 ab.

Die eine zweite elastische Kraftspeichereinrichtung bildende Tellerfederanordnung 80 der Reibeinrichtung 70 übt nur axiale Kräfte aus, die einerseits mittels des Einstellelements 76 an der Drehwelle 50 abgestützt werden und andererseits über die die Reibflächen der Reibeinrichtung umfassende Abstützanordnung an dem Ringbund 51d der Drehwelle 50 abgestützt werden. Diese Abstützanordnung ist beim gezeigten Ausführungsbeispiel von dem Koppelglied 65 und der Laufbuchse 61 gebildet.

Vorteilhaft kann man einen Rotationsanschlag für den Schwenkbereich der äußeren Käfigplatte 28 relativ zum Deckelelement 19 und damit dem beweglichem Element 16 vorsehen. Beim gezeigten Ausführungsbeispiel (vgl. die Fig. 3, 7 und 8) ist dieser verdeckt ausgeführt und von einer die Aufnahmenut 87 für den O-Ring 85 radial außerhalb umgebenden, kreissegmentförmigen Aufnahmenut 89 in der äußeren, der Käfigplatte 28 zugekehrten Endfläche des Deckelelements 19 gebildet. In diese Aufnahmenut greift ein einen rotatorischen Anschlag bildender Endabschnitt einer Anschlagschraube 91 ein, die durch eine zugeordnete Öffnung der Unterlegscheibe 53 in eine ein Innengewinde aufweisende Einschrauböffnung 28b der Käfigplatte 28 eingeschraubt ist.

Ein Ende 89a der Aufnahmenut 89 bildet einen ersten rotatorischen Endanschlag für die Käfigplatte 28 und damit die Kettenführungsbaugruppe. Schlägt der Anschlagschraube 91 mit ihren in die Aufnahmenut 89 aufgenommenen Endabschnitt gegen diesen Endanschlag 89a an, so befindet sich die Kettenführungsbaugruppe in einer Art Nullstellung. Die Kettenführungsbaugruppe nimmt die Nullstellung dann ein, wenn keine Kette durch die Kettenführungsbaugruppe gespannt gehalten wird. Über diesen Anschlag können das Außengewinde 19a und das Innengewinde 16a durch Verdrehen der Kettenführungsbaugruppe 25 bzw. der äußeren Käfigplatte 28 in Löserichtung gegeneinander verdreht werden. Das Deckelelement 19 kann so einfach aus dem beweglichen Element (P-Knuckle) 16 herausgeschraubt werden.

Das andere Ende 89b der Aufnahmenut 89 bildet demgegenüber einen ein Überdrehen der Torsionsfeder 44 verhindernden Endanschlag. Somit kann die Kettenführungsbaugruppe 25 nur begrenzt in die der Kettenspannrichtung S entgegengesetzte Schwenkrichtung L verdreht werden. Dieser rotatorische Endanschlag 89b kann überdies dazu verwendet werden, vermittels der Kettenführungsbaugruppe 25 bzw. der äußeren Käfigplatte 28 das Deckelelement 19 in die Aufnahme 17 des beweglichen Elements (P-Knuckle) 16 einzuschrauben und festzuziehen. Die Montage wird so erheblich erleichtert.

Weitere Einzelheiten des Umwerfers nach dem ersten Ausführungsbeispiel erschließen sich dem Fachmann ohne weiteres aus den zugehörigen Figuren.

Zum Ausführungsbeispiel ist noch anzumerken, dass sowohl axiale als auch radiale Kompaktheit für das bewegliche Element 16 ermöglicht ist.

Betreffend die axiale Kompaktheit ist festzustellen, dass das bewegliche Element (P-Knuckle) 16 axial deutlich kompakter als bei den bekannten Ausführungsformen der DE 10 2014 225 036 A1 / US 9,463,846 B2 ausgeführt ist. Hierzu trägt vor allem bei, dass die radial innerhalb der Torsionsfeder 44 angeordnete Dämpfungseinrichtung 38 einschließlich ihrer Rollenkopplung 60, der Reibeinrichtung 70 und dem zugehörigen Tellerfederpaket 80 im axialen Erstreckungsbereich der Torsionsfeder 44 angeordnet ist. Hierzu wird auf Fig. 3 Bezug genommen. Diese axiale Kompaktheit ist ein wesentlicher Vorteil der erfindungsgemäßen Ausführungsform.

Weitere wesentliche Vorteile der erfindungsgemäßen Ausführungsform sind die günstige Lagerung der Drehwelle 50 am Gehäusedeckel, also dem Deckelelement 19, in Verbindung mit dem sich aus der axial innen liegenden Lagerung am beweglichen Element ergebenden vergleichsweise großen Lagerabstand, die Ankoppelung der Torsionsfeder 44 an der Kettenführungsbaugruppe über die Drehwelle 50 und die Abstützung der von der Tellerfederanordnung 80 ausgeübten axialen Druckkräfte an der Drehwelle 50 ohne Mitwirkung des beweglichen Elements 16. Auch die von der Schrauben-Torsionsfeder 44 ausgeübten Drehkräfte werden ohne Mitwirkung des beweglichen Elements 16 ausgeübt und abgestützt, so dass die beschriebene Feder-Dämpfer-Baueinheit 83 diese beiden elastischen Kraftspeichereinrichtungen 44 und 80 in ihrem jeweiligen gespannten Zustand enthalten kann.

Ein weiterer großer Vorteil ergibt sich aus dem modularen Aufbau und der Möglichkeit der Bereitstellung eines eigenständig handhabbaren und montierbaren und hinsichtlich der den Reibschluss der Reibeinrichtung beeinflussenden Vorspannkraft der Tellerfederanordnung justierbaren Feder-Dämpfer-Moduls, an dem schon die äußere Käfigplatte 28 oder gar die gesamte Kettenführungsbaugruppe 25 montiert sein kann. Dieses Feder-Dämpfer-Modul ist bzw. die entsprechende Baueinheit kann dann nach fertiger Montage und fertiger Justage auf einfacher Weise mit dem beweglichen Element 16 kombiniert werden, durch Einstecken in die Aufnahme 17 und formschlüssiges, reibschlüssiges oder stoffschlüssiges Verbinden, beispielsweise Einschrauben, mit dem eine Art Gehäuse für die Baueinheit bildenden beweglichen Element 16, wobei das Deckelelement 19 den zugehörigen Gehäusedeckel bildet.

Weitere Vorteile resultieren daraus, dass der Innenraum dieses Gehäuses mit wenig Aufwand zuverlässig abgedichtet sein kann, sodass eine Art hermetisch dichtes Maschinengehäuse für die in die Aufnahme aufgenommenen Komponenten der Baueinheit geschaffen ist, wodurch Korrosionsprobleme und das Eintreten vom Schmutz vermieden werden. Dies trägt erheblich dazu bei, über eine lange Lebensdauer definierte Eigenschaften der Kettenspannfunktion und der Dämpfungsfunktion sowie eine präzisen Drehlagerung der Kettenführungsbaugruppe zu gewährleisten.

Anzumerken ist, dass diese Vorteile unabhängig von dem Aufbau und der Ausgestaltung der Dämpfungseinrichtung sind, sodass auch andersartige Dämpfungseinrichtungen in Betracht kommen. Viele diese Vorteile sind auch völlig unabhängig davon, ob der hintere Umwerfer mit einer Dämpfungseinrichtung im beweglichen Element (P-Knuckle) ausgeführt ist oder nicht. Ausgehend von dem vorgestellten Ausführungsbeispiel kann der Fachmann ohne Weiteres eine konstruktiv vereinfachte Ausführungsform ohne Dämpfungseinrichtung bereitstellen, bei der die Torsionsfeder analog über die Drehwelle an der Kettenführungsbaugruppe angekoppelt ist, die Drehwelle vermittels eines Gehäusedeckels an dem beweglichen Element gelagert ist und diese Komponenten als Baugruppe oder Feder-Modul vormontierbar sind, um dann auf die beschriebene Art und Weise mit dem Körper des beweglichen Elements kombiniert zu werden, unter Ermöglichung einer einfachen und zuverlässigen Abdichtung. Bei dem Ausführungsbeispiel wird tatsächlich nur ein einziger O-Ring, nämlich der O-Ring 85, verwendet, um den Innenraum des beweglichen Elements 16 nach außen zuverlässig abzudichten.

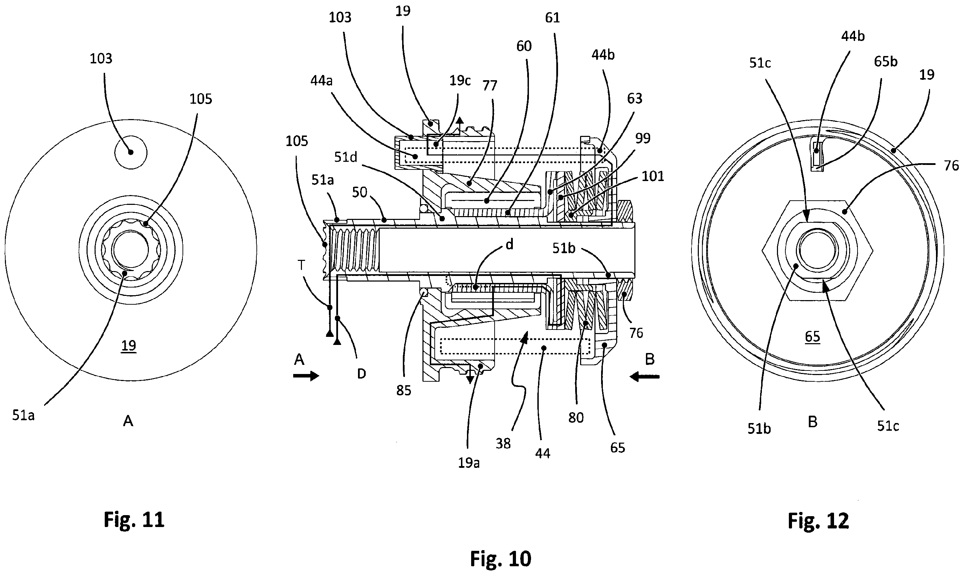

Ein zweites Ausführungsbeispiel für einen erfindungsgemäßen Fahrradumwerfer, der eine Dämpferbaugruppe im Wesentlichen entsprechend dem ersten konstruktiven Ansatz enthält, ist in den Figuren 11 bis 16 in verschiedenen Ansichten gezeigt. Dargestellt ist nur das bewegliche Element (P-Knuckle) 16 mit den daran bzw. darin angeordneten Komponenten und der äußeren Käfigplatte 28. Es werden in der folgenden Beschreibung des zweiten Ausführungsbeispiels für analoge und identische Elemente die gleichen Bezugszeichen wie vorangehend für das erste Ausführungsbeispiel verwendet und nur die Unterschiede gegenüber dem ersten Ausführungsbeispiel erläutert. Einige konstruktive Änderungen des zweiten Ausführungsbeispiels gegenüber dem ersten Ausführungsbeispiel lassen sich ohne Weiteres aus den Figuren entnehmen und brauchen eigentlich keine weitere Erläuterung.

Der wichtigste Unterschied gegenüber dem ersten Ausführungsbeispiel liegt darin, dass das auch als Federflansch bezeichenbare Koppelglied 65, welches zur Ankoppelung der Schrauben-Torsionsfeder 44 an der Drehwelle 50 dient, um die Vorspannkraft über die Drehwelle auf die Kettenführungsbaugruppe auszuüben, gemäß dem zweiten Ausführungsbeispiel nicht zur Reibeinrichtung gehört, abgesehen von einer Mitwirkung an der axialen Abstützung der Tellerfederanordnung 80. Das Koppelglied 65 erfüllt insoweit keine Doppelfunktion wie das Koppelglied 65 des ersten Ausführungsbeispiels. Stattdessen ist eine auch als Friktionsscheibe ansprechbare zusätzliche Reibscheibe 99 vorgesehen, die drehfest aber axial beweglich auf der Drehwelle 50 angeordnet ist und mit dem Friktionsflansch 63 der Laufbuchse 61 reibschlüssig eingreift. Betreffend die Realisierung der Reibeinrichtung 70 ersetzt die Reibscheibe 99 also das Koppelglied 65 des ersten Ausführungsbeispiels. Die als Tellerfederanordnung realisierte elastische Kraftspeichereinrichtung 80 der Reibeinrichtung 70 ist zwischen dem an dem Einstellelement 76 axial abgestützten Koppelglied 65 und der Reibscheibe 99 eingespannt.

Wie beim ersten Ausführungsbeispiel dient das Einstellglied 76 zur Einstellung der Vorspannkraft der Tellerfederanordnung 80 und damit des Reibschlusses zwischen der Reibscheibe 99 und dem Friktionsflansch 63 und damit der über die Drehwelle 50 auf die Kettenführungsbaugruppe ausgeübten Dämpfungskraft. Wie in den Figuren 10 und 13 zu erkennen, ist die Tellerfederanordnung auf einem radial innen liegenden Zentrierelement 101 angeordnet. Die Drehwelle 50 ist an ihrem axial inneren Endbereich mit Abflachungen 51c auf entgegengesetzten Seiten ausgeführt, die für die Drehkopplung mit dem Koppelglied 65 und der Friktionsscheibe 99 dienen, die an ihrem Innenumfang komplementär ausgeführt sind. Man kann eine Schraubensicherung für das Einstellelement 76 beispielsweise durch Verklebung oder auf anderer Art und Weise vorsehen, wenn dies etwa zur Erschwerung einer Manipulation durch einen Nutzer gewünscht ist. Technisch zwingend nötig ist eine gesonderte Schraubensicherung nicht, da das Einstellelement 76 gegen das rotationsfest auf der Drehwelle sitzende Koppelglied 65 festgezogen sein kann, was eine hinreichende Sicherung gegen eine unbeabsichtigte Verstellung ergibt.

Die Schrauben-Torsionsfeder 44 ist an ihrem in den Figuren 10 und 13 rechten, axial inneren Ende 44b in eine als Radialschlitz ausgeführte Koppelaussparung 65b des Koppelglieds 65 aufgenommen. An ihrem in den Figuren 10 und 13 linken, axial äußeren Ende 44a greift die Torsionsfeder 44 in eine Koppelaussparung 19c des hier vor allem als Gehäusedeckel angesprochenen Deckelelements 19 ein. Diese Koppelaussparung könnte wie beim ersten Ausführungsbeispiel nicht durchgehend ausgeführt sein, also nach außen geschlossen sein. Beim dargestellten Ausführungsbeispiel ist diese Koppelaussparung 19c aber durchgehend ausgeführt und das linke Federende 44a steht über eine Vorderseite des Gehäusedeckels 19 vor. Zur Abdichtung ist in die Koppelaussparung 19c eine Dichtkappe 103 aufgenommen, in die das axial äußere Federende 44a eingreift. Bei der Dichtkappe 103 kann es sich um ein gegenüber dem Gehäusedeckel 19 gesondertes Element handeln, das von innen in die Koppelaussparung 19c eingeführt ist und mit einem radial vorstehenden Flansch mit einem die Koppelaussparung 19c begrenzenden Abschnitt des Gehäusedeckels 19 so formschlüssig eingreift, dass die Dichtkappe 103 nicht nach außen abgezogen werden kann. Es ist für einen dichtenden Eingriff zwischen der Dichtkappe 103 und dem Gehäusedeckel 19 gesorgt. Auch eine Verklebung der Dichtkappe 103 mit dem Gehäusedeckel 19 kommt in Betracht. Ferner könnte man die Dichtkappe 103 auch einteilig mit dem Gehäusedeckel 19 ausführen, insbesondere wenn dieser in einem Spritzgussverfahren oder dergleichen aus Kunststoff hergestellt wird. Im Falle einer Herstellung des Gehäusedeckels 19 aus Metall ist demgegenüber eine gesonderte Ausführung der Dichtkappe 103 bevorzugt.

Wie in den Figuren 14 und 15, vor allem in Fig. 15, veranschaulicht, erfüllt die Dichtkappe 103 eine Zusatzfunktion. Die Dichtkappe dient nämlich als offenliegender Rotationsanschlag zwischen dem Kettenkäfig und dem Gehäusedeckel 19 und damit dem beweglichen Element (P-Knuckle) 16. Hierzu weist die äußere Käfigplatte 28 zwei Käfiganschläge 89a und 89b auf. Der Käfiganschlag 89a schlägt an der Dichtkappe 103 dann an, wenn sich die Kettenführungsbaugruppe in ihrer Nullstellung befindet. Vermittels dieses Anschlags lässt sich der Gehäusedeckel 19 aus dem Innengewinde des "Gehäuses" in Form des beweglichen Elements (P-Knuckle) 16 herausschrauben. Der Käfiganschlag 89b ist ein Endanschlag für den Käfig, der ein Überdrehen der Torsionsfeder 44 verhindert und ein einfaches Einschrauben des Gehäusedeckels 19 in das Innengewinde des beweglichen Elements (P-Knuckle) 16 ermöglicht.

Angemerkt sei, dass man auch einen andersartigen Deckelüberstand anstelle der beschriebenen Dichtkappe 103 als deckelseitiges Anschlagelement vorsehen kann. Ein Zusammenhang mit der Ankopplung der Torsionsfeder an dem Deckelelement 19 und der Abdichtung des Innenraums des beweglichen Elements 16 braucht also nicht bestehen. Es kommt auch eine überstehende Formation des beweglichen Elements 16 als Rotationsanschlag in Betracht.

Der Rollenfreilauf 60, als dessen inneres Kupplungselement die Laufbuchse 61 dient, ist beim gezeigten Ausführungsbeispiel in einer rotatorischen Presspassung in der mit dem Gehäusedeckel 19 einteiligen Halterung 77 aufgenommen. Die Halterung 77 ist abweichend vom ersten Ausführungsbeispiel als am Außenumfang im Querschnitt axial abgeschrägter Hülsenabschnitt des Deckelelements 19 ausgeführt.

Wie beim ersten Ausführungsbeispiel sind die von der Tellerfederanordnung 80 ausgeübten Druckkräfte einerseits über das Koppelglied 65 und die Einstellmutter 76 an der Drehwelle 50 abgestützt und andererseits über die Friktionsscheibe 99 und die Laufbuchse 61 an einem Ringbund 51d am Außenumfang der Drehwelle 50 abgestützt.

Eine axial äußere Endfläche der Laufbuchse 61 und eine axial innere Ringfläche des Ringbunds 51d bilden ein weiteres Paar von reibschlüssig eingreifenden Reibflächen der Reibeinrichtung 70. Gemäß dem gezeigten Ausführungsbeispiel erstrecken sich diese Reibflächen im Querschnitt schräg zur axialen und radialen Richtung, beispielsweise mit einem Winkel von etwa 45 Grad. Hierdurch wird einerseits der wirksame Flächeninhalt dieser Reibflächen vergrößert und andererseits eine Zentrierfunktion in Bezug auf die Laufbuchse 61 relativ zur Drehwelle 50 erreicht. Bezugnehmend auf den in Figuren 10 und 13 mit D bezeichneten Kraftfluss für die Dämpfungskraft tritt hier ein in dieser Figur gepunktet dargestellter additiver Kraftfluss d auf, wie an sich auch beim ersten Ausführungsbeispiel aufgrund der axial gerichteten Reibflächen des Ringbunds 51d und des axial äußeren Endes der Laufbuchse 61. Die von der Friktionsscheibe 99 und dem Friktionsflansch 63 gebildeten Reibflächen haben offensichtlich einen deutlich größeren Reibdurchmesser als die den additiven Kraftschluss ergebenden abgeschrägten Reibflächen der Drehwelle und der Laufbuchse 61.

Zum drehfesten Ankoppelung der Drehwelle 50 an der Kettenführungsbaugruppe ist die Drehwelle mit einem Zahnprofil 105 an ihrem aus dem Deckelelement 19 vorstehenden Endabschnitt ausgeführt. Wie in Fig. 13 zu erkennen, steht die Drehwelle 50 weiter als beim ersten Ausführungsbeispiel über den Gehäusedeckel 19 vor, durch eine Durchtrittsöffnung der äußeren Käfigplatte 28 bis hin zur inneren Käfigplatte 30, an der das äußere Ende der Drehwelle 50 durch die Schraube 54 festgelegt ist. Dabei greift das Zahnprofil 105 mit einer komplementären Halteformation der inneren Käfigplatte 30 formschlüssig ein, um eine drehfeste Kopplung zu erreichen. Zwischen den beiden Käfigplatten ist eine als Abstandhülse wirksame Käfigbuchse vorgesehen. Zur Abdichtung dient eine schleifende Dichtung in Form eines O-Rings 85, die zwischen der Drehwelle 50 und dem Gehäusedeckel 19 wirksam ist. Wie beim ersten Ausführungsbeispiel ist das Deckelelement 19 mit dem als Gehäuse dienenden beweglichen Element (P-Knuckle) 19 verschraubt, vorzugsweise mittels mehrgängiger Außen- und Innengewinde 16a, 19a. Andere Arten der Verbindung des Deckels 19 mit dem Gehäuse 16 in Betracht, ggf. ebenfalls formschlüssig oder/und reibschlüssig oder/und stoffschlüssig, etwa verklebt.

Wie in Fig. 13 zu erkennen, ist beim gezeigten Ausführungsbeispiel eine extrem kurze Toleranzkette TK von der Käfigbuchse 107, spezifisch von der die Anschlagsfläche für die Leitrolle 32 bildenden Oberfläche 29 der äußeren Käfigplatte 28 (vgl. Fig. 14) zum beweglichen Element (P-Knuckle) 16 realisiert. Die Drehwelle 50 ist ähnlich wie beim ersten Ausführungsbeispiel einerseits am Gehäusedeckel 19 und andererseits mit großem axialen Abstand zur deckelseitigen Lagerung mittels eines mit dem beweglichen Element einteiligen Lagerzapfens 81 gelagert. Das als Gleitlager ausgeführte deckelseitige linke Achslager wirkt als Zentrierungspassung 109 für die Drehwelle 50. Eine einzige Dichtung, der schon angesprochene O-Ring 85, dichtet das gesamte Gehäuse. Der Gehäusedeckel 19 ist am Gehäuse in Form des beweglichen Elements (P-Knuckle) 16 durch eine Zentrierungspassung 112 zentriert, die durch den Außendurchmesser des Gehäusedeckels 19 und den Innendurchmesser am Gehäuse (bewegliches Element bzw. P-Knuckle) 16 definiert ist. Das Deckelelement 19 ist auch axial definiert am beweglichen Element (P-Knuckle) 16 gehalten, durch einen axialen Anschlag 103 zwischen dem Gehäusedeckel und dem Gehäuse.

Wie auch beim ersten Ausführungsbeispiel könnte das treffend als Federflansch bezeichenbare Koppelglied 65 mehrteilig ausführt sein, beispielsweise zweiteilig, was eventuell herstellungstechnische Vorteile bieten könnte.

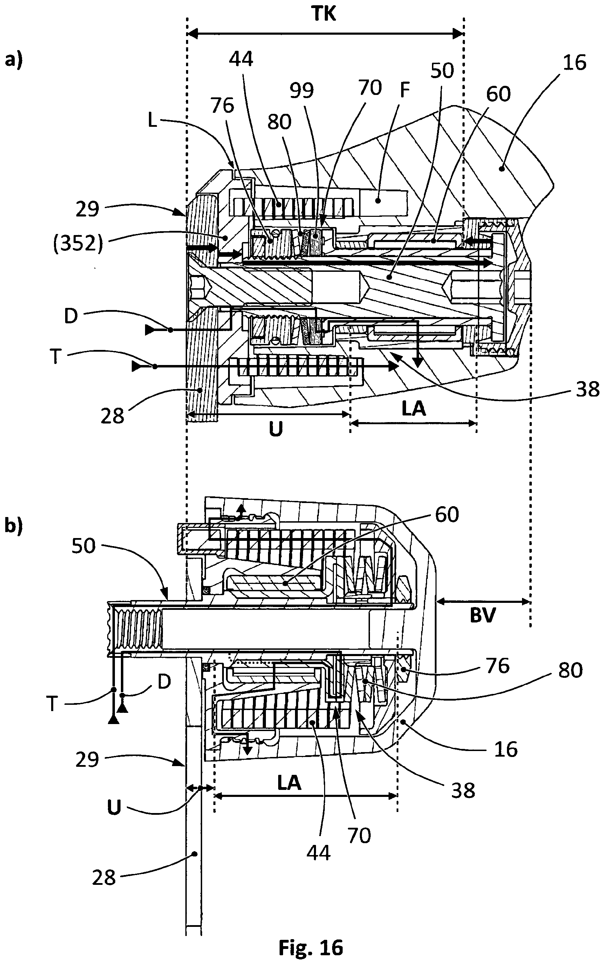

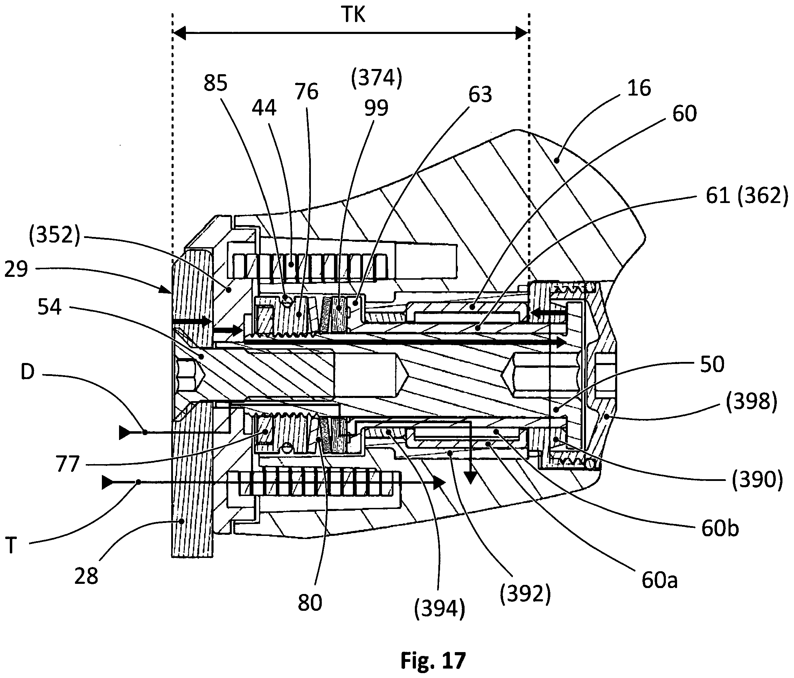

Für die Praxis relevante Vorteile der hierin beschriebenen erfindungsgemäßen Ausführungsformen gegenüber bekannten Lösungen des Stands der Technik, insbesondere den bekannten Lösungen gemäß der DE 10 2014 225 036 A1 und der entsprechenden US 9,463,846 B2, werden einfach ersichtlich aus den Figuren 16 und 17, die die Ausführungsform des zweiten Ausführungsbeispiels (vgl. Fig. 16b) mit der bekannten Lösung gemäß Fig. 15 der DE 10 2014 225 036 A1 / US 9,463,846 B2 (vgl. Fig. 16a und Fig. 17) vergleichen. In Fig. 16a und Fig. 17 sind für Elemente, die in einem gewissen Sinn mit Elementen des erfindungsgemäßen Ausführungsbeispiels korrespondieren oder diesen entsprechen, die gleichen Bezugszeichen verwendet und sind für einige Element in Klammern gesetzte Bezugszeichen aus den Figuren 15 bis 17 und der zugehörigen Beschreibung des vierten Ausführungsbeispiels der DE 10 2014 225 036 A1 / US 9,463,846 B2 verwendet. Es wird ausdrücklich auf die Beschreibung dieser bekannten Lösung in den genannten Schriften verwiesen, die mit den zugehörigen Figuren 15 bis 17 und dem gesamten übrigen Inhalt der DE 10 2014 225 036 A1 / US 9,463,846 B2 durch Bezugnahme vollständig in die vorliegende Beschreibung einbezogen sind. Der gesamte Inhalt der DE 10 2014 225 036 A1 / US 9,463,846 B2 gehört somit zur Offenbarung dieser Beschreibung.

Wie in Fig. 16a zu erkennen, steht die Torsions-Schraubenfeder 44 der bekannten Lösung einerseits mit einem Formelement F des beweglichen Elements 16 in Formschlusseingriff und andererseits mit einer als "P-Washer" bezeichenbaren Zwischenscheibe (352) in Eingriff, über die die in einer ringförmigen zweiten Aufnahme aufgenommene Torsionsfeder 44 mit der äußeren Käfigplatte 28 der Kettenführungsbaugruppe gekoppelt ist, um die Vorspannung der Torsionsfeder 44 auf die Kettenführungsbaugruppe zu übertragen. Die Torsionsfeder ist gegenüber der Außenseite nicht abgedichtet. Es existiert sogar ein Luftspalt L zwischen dem beweglichen Element (P-Knuckle) 16 und der Zwischenscheibe 352. Die Reibeinrichtung 70 ist von einer Reibscheibe 99 und einem Friktionsflansch einer die Drehwelle 50 umgebenden Laufbuchse 61 (352) gebildet.

Unter Vermittlung der Laufbuchse 61 (362) ist die Drehwelle 50 über Drehlager (390) und (394) an einem im Körper des beweglichen Elements 16 drehfest gehaltenen hülsenartigen Einsatz (392) bzw. direkt an dem Körper des beweglichen Elements (P-Knuckle) gelagert. Wie in Figur 16A der genannten Druckschriften zu erkennen, handelt es sich bei dem Einsatz (392) um eine am Außenumfang als Sechskant ausgeführtes Element, das in das bewegliche Element 16 eingebettet ist. Der Axialabstand LA der von diesen beiden Lagern (390) und (394) gebildeten Lageranordnung ist deutlich kleiner als der Lagerabstand LA bei der erfindungsgemäßen Ausführungsform. Es ist bei der vorbekannten Ausführungsform nur ein geringer Teil des axialen Bauraums für diese Lageranordnung ausgenutzt, sodass ein größer axialer Überstand U verbleibt, der wesentlich größer ist als der entsprechende Überstand U bei der erfindungsgemäßen Ausführungsform.

Bei der bekannten Lösung des Stands der Technik ist überdies die Toleranzkette TK von der Käfigbuchse bis zum beweglichen Element sehr viel länger als bei der zum Vergleich herangezogenen Ausführungsform nach der Erfindung. Hierzu ist ergänzend auf Fig. 13 zu verweisen.

Nur der Kraftfluss D für die Dämpfungskraft der Dämpfungseinrichtung verläuft nach der bekannten Lösung über die Drehwelle 50, nicht aber der Kraftfluss T für die Vorspannkraft, der direkt zwischen der äußeren Käfigplatte 28 bzw. der dieser zuzurechnenden Zwischenscheibe (352) und dem beweglichen Element 16 verläuft. Zu weiteren Einzelheiten der bekannten Lösung wird auf die detaillierte Beschreibung des dortigen vierten Ausführungsbeispiels gemäß den Figuren 15 bis 17 und die dieser Beschreibung zugrundeliegende Erläuterungen der vorangehenden Ausführungsbeispiele in der DE 10 2014 225 036 A1 / US 9,463,846 B2 verwiesen.

Aus Fig. 16 wird ersichtlich, dass die erfindungsgemäße Ausführungsform axial deutlich kompakter ausgeführt ist als die bekannte Lösung des Stands der Technik. Es besteht ein erheblicher axialer Bauraumvorteil BV bezüglich der sogenannten "heal clearance". Dies wird erreicht durch geschickte Anordnung der verschiedenen internen Komponenten, bzw. durch eine gegenüber der bekannten Lösung bezüglich ihrer axialen Reihenfolge geänderte Positionierung derselben, und zwar einander axial überlappend bzw. im axialen Erstreckungsbereich der Torsionsfeder, ohne zwingende wesentliche Zunahme des benötigten radialen Bauraums. Entsprechende Vorteile ergeben sich auch im Falle einer Ausführung des hinteren Umwerfers mit einer anderen Dämpfungseinrichtung sowie auch im Falle einer Ausführung des hinteren Umwerfers ohne Dämpfungseinrichtung.

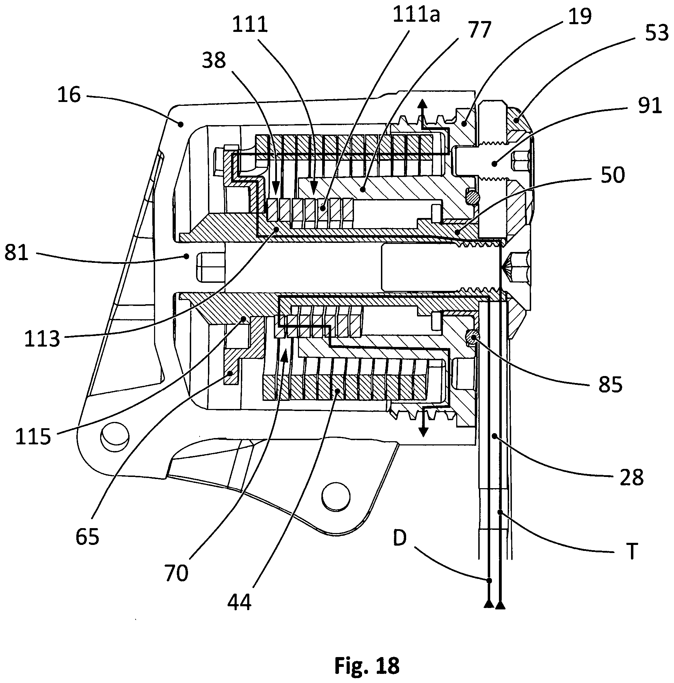

Fig. 18 zeigt ein drittes Ausführungsbeispiel für einen erfindungsgemäßen Fahrrad-Kettenumwerfer gemäß einem hinsichtlich der Ausführung der Dämpfungseinrichtung deutlich abgewandelten zweiten konstruktiven Ansatz. Im Folgenden werden für entsprechende oder analoge Elemente die gleichen Bezugszeichen wir in der vorangehenden Beschreibung des ersten und des zweiten Ausführungsbeispiels verwendet und nur die Unterschiede gegenüber diesen Ausführungsbeispielen erläutert.

Gemäß dem dritten Ausführungsbeispiel ist die Dämpfungseinrichtung 38 als sog. Schlingfederkupplung 111 ausgeführt, deren als Schlingfeder bezeichenbare Schraubenfeder 111a einerseits drehfest in der Halterung 77 des Gehäusedeckels 19 gehalten ist und andererseits an zumindest einigen ihrer Federwindungen reibschlüssig mit einem zylindrischen Absatz 113 der Drehwelle 50 reibschlüssig eingreift. Diese Schlingfeder 111a bildet gleichzeitig eine Reibeinrichtung und eine Koppeleinrichtung in Form einer Freilaufkupplung, da sie unterschiedliche große Reibmomente in Abhängigkeit von der Drehrichtung der Drehwelle 50 relativ zum Gehäusedeckel 19 und damit dem beweglichen Element (P-Knuckle) 16 erzeugt. Der Umlaufsinn der Schlingfeder 111a ist so gewählt, dass sich die Schlingfeder bei einer Verdrehung der Drehwelle 50 in der Richtung L entgegen der Spannrichtung S (vgl. Fig. 2) durch die wirkenden Reibkräfte weiter zu zieht, sodass eine wesentliche Dämpfungskraft auf die Drehwelle und damit die Kettenführungsbaugruppe ausgeübt wird, die einer ungewünschten Lockerung der Kettenspannung entgegenwirkt. In der Spannrichtung S lockert sich hingegen der reibschlüssige Eingriff zwischen der Drehwelle 50 und der Schlingfeder 111a, sodass nur eine sehr geringe oder gar verschwindende Reibkraft und damit keine wesentliche Dämpfungskraft ausgeübt wird.

Die als Dämpferfeder wirkende Schlingfeder 111a kann einfach radial innen an der etwa als Hülsenabschnitt ausgeführten Halterung 77 des Deckels 19 eingepresst sein oder alternativ auf einen entsprechenden Haltungsabschnitt radial außen aufgepresst sein, um dort vorzugsweise drehfest gehalten zu sein, und steht radial innen im reibschlüssigen Wirkeingriff mit einem Oberflächenabschnitt der Drehwelle 50, wie erläutert. Es kommt alternativ auch in Betracht, eine als Dämpferfeder wirkende Schlingfeder mit entgegengesetztem Umlaufsinn zum Umlaufsinn der Schlingfeder 111a radial innen mit einem Abschnitt der Drehwelle vorzugsweise drehfest zu koppeln, wobei die Schlingfeder radial außen an zumindest einigen ihrer Federwindungen mit einem Innenumfangsabschnitt eines Hülsenabschnitts oder dergleichen des Deckels 19 im reibschlüssigen Wirkeingriff steht.

Bei der hier vorgeschlagenen Realisierung der Dämpfungseinrichtung 38 als Schlingfeder erfüllt das Koppelglied 65 keine Funktion in Bezug auf die Reibeinrichtung 70 bzw. Dämpfungseinrichtung 38. Das Koppelglied 65 dient nur zur Ankopplung der Torsions-Schraubenfeder 44 an der Drehwelle 50, wofür das Koppelglied 65 drehfest auf der Drehwelle angeordnet ist und durch einen Absatz 115 am Außenumfang auf dieser auch axial definiert gehalten ist. Ansonsten hat das dritte Ausführungsbeispiel viele Ähnlichkeiten mit dem ersten Ausführungsbeispiel, wie sich aus einem Vergleich mit Fig. 3 ergibt.

Für alle drei dargestellten Ausführungsbeispiele ergeben sich die anhand der Figuren 16, 17 und 13 erläuterten Vorteile gegenüber den bekannten Lösungen gemäß der DE 10 2014 225 036 A1 / US 9,463,846 B2.

Die vorstehend beschriebenen Ausführungsbeispiele der Figuren 1 bis 17 verwenden Friktionsscheiben und einen Rollenfreilauf ähnlich wie in der Druckschrift DE 10 2014 225 036 A1 bzw. US 9,463,846 B2, überwinden dabei jedoch wesentliche Nachteile des Standes der Technik, insbesondere hinsichtlich Abmessungen, Toleranzketten, Spielfreiheit, Dichtigkeit, Robustheit, Betriebssicherheit sowie Montage und Wartung. Das dritte Ausführungsbeispiel macht deutlich, dass entsprechende Vorteile auch mit einer völlig andersartigen Dämpfungseinrichtung erreichbar sind, und entsprechende Vorteile lassen sich auch bei Ausführungsformen ohne jede Dämpfungseinrichtung erreichen. Es resultiert ein wesentlich verbesserter hinterer Umwerfer und damit eine wesentlich verbesserte Kettenschaltung und insgesamt ein verbessertes Fahrrad.

Gemäß Vorstehendem betrifft die vorliegende Erfindung unter anderem einen grundlegend neuen Aufbau eines Feder-Dämpfer-Systems im P-Knuckle (beweglichen Element) 16 eines Schaltwerks, der eine Reihe von Verbesserungen bezüglich der eingangs skizzierten Problemfelder ermöglicht. Im Folgenden werden verschiedene der vorgeschlagenen konstruktiven Lösungen und damit erreichte Vorteile noch einmal zusammenfassend dargelegt, ohne Beschränkung der Allgemeinheit vor allem anhand des zweiten Ausführungsbeispiels der Figuren 10 bis 17 und der in den Figuren 16 a) und 17 gezeigten bekannten Lösung gemäß der DE 10 2014 225 036 A1 (im Folgenden auch kurz als DE'036 angesprochen) / US 9,463,846 B2 (im Folgenden auch kurz als US'846 angesprochen).

Vorgeschlagen wird die Integration des Feder-Dämpfer-Systems zu einer funktionalen und eigenständig vormontierbaren Unterbaugruppe, vgl. Fig. 10 bis 12 sowie Fig. 8 und 9 zum ersten Ausführungsbeispiel. Im Gegensatz zum eingangs genannten Stand der Technik, insbesondere gemäß DE'036 / US'846, wird bei dem erfindungsgemäßen Schaltwerk bzw. Feder-Dämpfer-System das Federmoment und das Dämpfermoment über die Achse (Drehwelle) auf den Schaltwerkskäfig übertragen.

Hingegen wurde beim Stand der Technik bisher üblicherweise nur das Dämpfermoment über die Achse übertragen, das Federmoment dagegen separat über den P-Washer (Deckscheibe zwischen Außenkäfig und Federgehäuse) bzw. direkt vom Federende auf den Schaltwerkskäfig. Auch die Momentabstützung von Feder und Dämpfer am P-Knuckle erfolgt im Gegensatz zum Stand der Technik über eine gemeinsame Schnittstelle am nun multifunktionalen Gehäusedeckel. Beim Stand der Technik erfolgte bisher eine separate Abstützung des Federmoments am P-Knuckle (beweglichen Element) über ein Formelement für das Federende und des Dämpfermoments an einem Sechskant-Insert für den Rollenfreilauf.

Nachfolgend werden die Kraftflüsse von der Käfigachse bis zum Federgehäuse/P-Knuckle bei einer bevorzugten Ausführungsform der Erfindung beschrieben. Die Kraftflüsse sind unter anderem in den Fig. 12, 13 und 16 ersichtlich.

Kraftfluss des Dämpfermoments:
1. Achse (Drehwelle) 50 -> Friktionsscheibe 99 (über formkorrespondierende Formschlusselemente an Achse und Friktionsscheibe)
2. Friktionsscheibe 99 -> Laufbuchse 61 (Reibmoment zwischen Friktionsscheibe 99 und Friktionsflansch 63 der Laufbuchse 61)
3. Laufbuchse 61 -> Rollenfreilauf 60 (Richtungsentkopplung des Dämpfermoments)
4. Rollenfreilauf 60 -> Gehäusedeckel 19 (über Reibschluss der rotatorisch festen Presspassung des Rollenfreilaufs 60 im Gehäusedeckel 19)
5. Gehäusedeckel 19 -> P-Knuckle 16 (über Reibschluss zwischen Gehäusedeckel 19 und P-Knuckle 16, oder über entsprechende Formelemente wie z.B. Bajonettverschluss des Gehäusedeckels im P-Knuckle. Die in den Figuren dargestellte Ausführungsform verfügt an dieser Stelle über ein mehrgängiges Gewinde mit entsprechend großer Gewindesteigung.

Kraftfluss des Federmoments:
1. Achse (Drehwelle) 50 -> Federflansch (Koppelglied) 65 (über formkorrespondierende Formschlusselemente an Achse 50 und Federflansch 65)
2. Federflansch 65 -> rechtes Federende 44b (über Formelement bzw. Aussparung zur Einhängung des Federendes 44b am Federflansch 65, vgl. Fig. 10 und 12)
3. Linkes Federende 44a -> Gehäusedeckel 19 (über Formelement bzw. Aussparung zur Einhängung des Federendes 44a am Gehäusedeckel 19, vgl. Fig. 10, 13 und 14)
4. Gehäusedeckel 19 -> P-Knuckle 16 (identisch wie oben zum Dämpferkraftfluss unter Ziffer 5)

Der demgemäß erzielte geänderte Kraftfluss führt u.a. dazu, dass sich das linke Federende der ersten elastischen Kraftspeichereinrichtung 44 stationär am P-Knuckle abstützt, und das rechte Federende antreibend auf die Drehwelle (Achse) und damit auf den Schaltwerkskäfig wirkt. Dies ist umgekehrt zum Stand der Technik, bei dem sich das rechte Federende stationär am P-Knuckle abstützt und das linke Federende auf den Schaltwerkskäfig wirkt, vgl. Fig. 16. Dieser Unterschied führt bei der erfindungsgemäßen Ausführungsform zu einer links gewickelten Schrauben-Torsionsfeder 44, während diese beim Stand der Technik rechts gewickelt ist.

Der vorgeschlagene erfindungsgemäße Aufbau ermöglicht eine besonders kompakte Bauform der Feder-Dämpfereinheit und damit des beweglichen Elements (P-Knuckle). Die geänderten Kraftflüsse, die Umgestaltung und geänderte relative Anordnung wesentlicher Bauteile und Baugruppen sowie deren Integration als Feder-Dämpfereinheit ermöglicht eine maßgeblich verbesserte Lageranordnung mit maximaler Abstützbreite, vgl. Fig. 16. Dies erlaubt wiederum eine Reduzierung der Breite der Lagerstellen und damit weitere Platzersparnis.

Die Ausführung des rechten Lagers als Lagerzapfen 81 im P-Knuckle ermöglich zudem eine axiale Überlappung von Lager und Vorspannmutter (Einstellelement) 76 sowie Federflansch 65, d.h. dem die Torsionsfeder an der Drehwelle anbindenden Koppelglied 65, wodurch zusätzlich Bauraum insbesondere in seitlicher Richtung eingespart wird. Weiterhin kann die Vorspannmutter deutlich schmäler ausgeführt werden, da deren Anlage am verdrehgesicherten Federflansch keine zusätzliche Schraubensicherung bzw. Verstemmung wie beim Stand der Technik benötigt, vgl. Fig. 16, da die als Einstellelement dienende Vorspannmutter 76 gegen den Federflansch 65 festgezogen werden kann. Eine solche Schraubensicherung kann zur Vermeidung oder Erschwerung einer unautorisierten Manipulation durch einen Nutzer aber auch im Rahmen der Ausführung dieser erfindungsgemäßen Ausführungsform sinnvoll sein. Die Baubreite der Vorspannmutter kann weiterhin auch deswegen reduziert werden, da durch den erheblich vergrößerten Durchmesser der Friktionsscheibe 99 eine geringere Vorspannkraft der Vorspannfeder 80 (beim vorliegenden Ausführungsbeispiel beispielhaft als Tellerfederpaket 80 ausgeführt) der Reibeinrichtung 70 ausreichend ist.

Der größere Durchmesser der Friktionsscheibe 99 des zweiten Ausführungsbeispiels bzw. des Friktionsflansches des Koppelglieds 65 des ersten Ausführungsbeispiels einerseits und entsprechend des Friktionsflansches 63 der Dämpfer-Laufbuchse 61 andererseits gewährleistet auch einen erhöhten Reibflächeninhalt der Reibeinrichtung und damit verbunden eine geringere Flächenpressung und somit weniger Verschleiß und ebenso eine bessere Reproduzierbarkeit bzw. Konstanthaltung des gewünschten Reibmoments über die Produktlebensdauer. Ermöglicht wird der größere Friktionsscheibendurchmesser wiederum durch den erfindungsgemäß integrierten Aufbau der Feder-Dämpfer-Baugruppe, welcher zudem ohne das im Stand der Technik für Federführung und Dichtung benötigte Zylinderelement (vgl. Figuren 16a und 17) auskommt.

Das linke Ende der Laufbuchse 61 (vgl. Fig. 10, 13, 14 und 16) wird vorzugsweise mit einer schrägen Anschlagsfläche und einer dazu korrelierenden Anschlagsfläche an der Achse (Drehwelle) 50 ausgeführt. Dadurch erhöht sich bei gleicher Vorspannkraft das Reibmoment dieser Reibpaarung, welches additiv zum Reibmoment der Reibpaarung zwischen Friktionsscheibe bzw. Friktionsflansch und Laufbuchse beiträgt. Weiterhin hat diese schräge Anschlagsfläche bzw. Reibfläche eine zentrierende Wirkung, die sich positiv auf die Achsführung und die Lebensdauer des Rollenfreilaufs auswirkt.

Weitere Vorteile der erfindungsgemäßen Ausführungsformen:
Die P-Knuckle-Baugruppe kann auf Basis der Erfindungsvorschläge wie ein geschlossenes und vollständig gedichtetes Maschinengehäuse ausgebildet werden, welches nur noch an einer Stelle, an dem Gehäusedeckel 19, von der Käfigachse (Drehwelle) 50 durchdrungen wird. Im Unterschied hierzu ist beim Stand der Technik zumindest die Torsionsfeder ungedichtet, vgl. Fig. 16 oben, und kann aufgrund des großen radialen Durchmessers des Federmoment-Kraftflusses auch faktisch nicht sinnvoll gegenüber der Umgebung gedichtet werden. Dies führt beim Stand der Technik zu Korrosionsproblemen und unerwünschten Veränderungen der Rückstellmomente.

Dank der hierin dargelegten Vorschläge wird zum vollständig dichten Einschluss sämtlicher Bauteile der Feder-Dämpfer-Baugruppe, einschließlich der Torsionsfeder, hingegen nur noch eine schleifende Dichtung benötigt, die zudem besonders effektiv auf dem sehr kleinen Achsdurchmesser angeordnet werden kann, wodurch sich Reibkraft, Reibweg und Verschleiß der Dichtung im Vergleich zum Stand der Technik erheblich reduzieren lassen.

Die Versiegelung der Bohrung im Gehäusedeckel für das linke Federende (vgl. Fig. 10, 13 und 14) kann durch ein statisches Dichtelement realisiert werden, beispielsweise durch eine Dichtkappe 103. Alternativ ist auch eine Sacklochbohrung oder Sacklochaussparung für das Federende im Gehäusedeckel 19 umsetzbar. Der Gehäusedeckel 19 kann zum als Gehäuse dienenden beweglichen Element (P-Knuckle) 16 ebenfalls einfach auf gängige Weise gedichtet werden; beispielsweise mit einem O-Ring. In der in den Figuren dargestellten Ausführungsform mit Gewinde (bevorzugt mehrgängiges Gewinde mit einer Steigung von vorzugsweise 2-8 mm) ergibt sich eine wirksame Dichtung zwischen Gehäusedeckel 19 und Gehäuse (P-Knuckle) 16 bereits durch den resultierenden axialen Anpressdruck.

Eine Besonderheit der hierin vorgeschlagenen Anordnung im montierten Zustand ist, dass die Käfigfeder stets ein Anzugsmoment für die Schraubverbindung zwischen Gehäusedeckel und P-Knuckle bereitstellt, mit anderen Worten das Gewinde des Gehäusedeckels 19 stets im P-Knuckle 16 festzudrehen versucht. Damit wird das Lösen des Gehäusedeckel-Gewindes wirksam verhindert, und es wird eine dauerhafte Abdichtung des Gehäusedeckels über dessen axiale Anschlagsfläche (vgl. Fig. 13) ohne zusätzliche Dichtelemente gewährleistet. Weiterhin trägt der axiale Anschlag des Gehäusedeckels 19 am P-Knuckle 16 zu einer kurzen Toleranzkette bei, was der gewünschten hohen Positioniergenauigkeit der Leitrolle 32 im Schaltwerkskäfig vorteilhaft zugutekommt. Es wird hierzu auf die Darstellung der Toleranzketten durch schwarze Blockpfeile, deren Längen sich zur jeweiligen Toleranzkette addieren, in den Fig. 13 und Fig. 16 verwiesen.

Der Außendurchmesser des Gehäusedeckels 19 wird über eine Passung mit dem Innendurchmesser am P-Knuckle 16 zentriert, vgl. insbesondere Fig. 13. Dies führt, zusammen mit der schon angesprochenen maximalen Abstützbreite der Achslagerung (vgl. Fig. 16), auch zu einer hervorragenden Zentrierung und damit Rundlaufgenauigkeit und Steifigkeit der Achse (Drehwelle) relativ zum Gehäuse bzw. P-Knuckle.

Um die Feder-Dämpfer-Unterbaugruppe werkzeugfrei aus dem beweglichen Element (P-Knuckle) 16 herausschrauben zu können, ist der Schaltwerkskäfig bei den dargestellten Ausführungsformen (zusätzlich zu dem die Käfigbewegung im Betrieb begrenzenden "cage stop", also dem Endanschlag des Käfigs entgegen der Federkraft) in der GegenDrehrichtung, also in Richtung der Federkraft, noch mit einem Käfiganschlag versehen, vgl. Fig. 14 und 15. Hierbei kann in vorteilhafter Weise ein und derselbe rotatorische Anschlag 103 am Gehäusedeckel 19 als Anlage sowohl für den Endanschlag 89b als auch für den Käfiganschlag 89a verwendet werden. Vorzugsweise wird das linke Ende 44a der Schrauben-Torsionsfeder 44 bzw. die Dichtkappe 103 für das linke Federende, oder ein entsprechend vorspringendes Formelement am Gehäusedeckel 19, als rotatorischer Anschlag 103 in diesem Sinne verwendet.

Gemäß vorstehendem wird ein Fahrradumwerfer bereitgestellt, der ein an einem Fahrradrahmen montierbares Basiselement (12), ein mit dem Basiselement (12) beweglich gekoppeltes, eine Aufnahme (17) aufweisendes bewegliches Element (16), eine im beweglichen Element (16) in der Aufnahme um eine Drehachse (A) drehbar gelagerte Drehwelle (50) und eine relativ zum beweglichen Element um die Drehachse (A) drehbare, drehfest an der Drehwelle (50) angekoppelte Kettenführungsbaugruppe (25) aufweist. Eine elastische Kraftspeichereinrichtung (44) ist dafür konfiguriert, auf die Kettenführungsbaugruppe eine Vorspannkraft auszuüben, die diese in eine definierte Drehrichtung relativ zu dem beweglichen Element (16) vorspannt.

Nach einem ersten Aspekt wird vorgeschlagen, dass eine direkt oder indirekt zwischen dem beweglichen Element (16) und der Kettenführungsbaugruppe wirksame Dämpfungseinrichtung (38) eine radial innerhalb der ersten elastischen Kraftspeichereinrichtung (44) innerhalb deren axialen Erstreckungsbereichs angeordnete Koppeleinrichtung (60) aufweist, über die die Dämpfungseinrichtung an wenigstens einem von einer in Bezug auf das bewegliche Element stationären Abstützung und der Drehwelle (50) angekoppelt ist.

Nach einem zweiten Aspekt wird vorgeschlagen, dass die erste elastische Kraftspeichereinrichtung (44) über die Drehwelle (50) an der Kettenführungsbaugruppe (25) angekoppelt ist, um die Vorspannkraft über die Drehwelle auf die Kettenführungsbaugruppe auszuüben.

Nach einem dritten Aspekt wird vorgeschlagen, dass die Drehwelle (50) mittels einer Drehlagerung an einem Deckelelement (19) drehbar gelagert ist, welches zusammen mit der sich durch eine Durchgangsöffnung des Deckelelements erstreckenden Drehwelle (50) die Aufnahme (17) des beweglichen Elements (16) verschließt und am beweglichen Element (16) befestigt ist.

## Patentansprüche

1. Hinterer Fahrradumwerfer, umfassend:
- ein Basiselement (12), welches an einem Fahrradrahmen (1) montierbar ist;
- ein eine Aufnahme (17) aufweisendes bewegliches Element (16), welches mit dem Basiselement (12) beweglich gekoppelt ist;
- eine im beweglichen Element (16) in der Aufnahme (17) um eine Drehachse (A) drehbar gelagerte Drehwelle (50);
- eine relativ zum beweglichen Element (16) um die Drehachse (A) drehbare Kettenführungsbaugruppe (25), welche an der Drehwelle drehfest angekoppelt ist;
- eine erste elastische Kraftspeichereinrichtung (44), welche dafür konfiguriert ist, eine die Kettenführungsbaugruppe in eine erste Drehrichtung (S) relativ zu dem beweglichen Element (16) vorspannende Vorspannkraft auf die Kettenführungsbaugruppe auszuüben; und
- eine Dämpfungseinrichtung (38), welche dafür konfiguriert ist, über die Drehwelle (50) eine Dämpfungskraft auf die Kettenführungsbaugruppe auszuüben und eine der Dämpfungskraft entsprechende Gegenkraft an einer in Bezug auf das bewegliche Element (16) stationären Abstützung (77) abzustützen, wobei die Dämpfungseinrichtung (38) eine Koppeleinrichtung (60; 111) umfasst, über die die Dämpfungseinrichtung an wenigstens einem von der Abstützung (77) und der Drehwelle (50) angekoppelt ist;
**dadurch gekennzeichnet, dass** die Koppeleinrichtung (60; 111) radial innerhalb der ersten elastischen Kraftspeichereinrichtung (44) innerhalb deren axialen Erstreckungsbereichs angeordnet ist.

2. Hinterer Fahrradumwerfer nach Anspruch 1, **dadurch gekennzeichnet, dass** die Koppeleinrichtung als Reibeinrichtung (111) ausgeführt ist, die zur Erzeugung der Dämpfungskraft mit wenigstens einem von der Drehwelle (50) und der Abstützung (77) reibschlüssig eingreift.

3. Hinterer Fahrradumwerfer nach Anspruch 1 oder 2, **dadurch gekennzeichnet, dass** die Koppeleinrichtung als Freilaufkupplung (60; 111) ausgeführt ist, welche dafür konfiguriert ist, die Dämpfungskraft über die Drehwelle (50) auf die Kettenführungsbaugruppe auszuüben oder hieran mitzuwirken.

4. Hinterer Fahrradumwerfer nach einem der Ansprüche 1 bis 3, **dadurch gekennzeichnet, dass** die erste elastische Kraftspeichereinrichtung (44) über die Drehwelle (50) an der Kettenführungsbaugruppe (25) angekoppelt ist, um die Vorspannkraft über die Drehwelle auf die Kettenführungsbaugruppe auszuüben.

5. Hinterer Fahrradumwerfer nach einem der Ansprüche 1 bis 4, **dadurch gekennzeichnet, dass** die Drehwelle (50) mittels einer Drehlagerung an einem Deckelelement (19) drehbar gelagert ist, welches zusammen mit der sich durch eine Durchgangsöffnung des Deckelelements erstreckenden Drehwelle (50) die Aufnahme (17) des beweglichen Elements (16) verschließt und am beweglichen Element (16) befestigt ist.

6. Hinterer Fahrradumwerfer, umfassend:
- ein Basiselement (12), welches an einem Fahrradrahmen (1) montierbar ist;
- ein eine Aufnahme (17) aufweisendes bewegliches Element (16), welches mit dem Basiselement (12) beweglich gekoppelt ist;
- eine im beweglichen Element (16) in der Aufnahme (17) um eine Drehachse (A) drehbar gelagerte Drehwelle (50);
- eine relativ zum beweglichen Element (16) um die Drehachse (A) drehbare Kettenführungsbaugruppe (25), welche an der Drehwelle drehfest angekoppelt ist; und
- eine erste elastische Kraftspeichereinrichtung (44), welche dafür konfiguriert ist, eine die Kettenführungsbaugruppe in eine erste Drehrichtung (S) relativ zu dem beweglichen Element (16) vorspannende Vorspannkraft auf die Kettenführungsbaugruppe auszuüben;
**dadurch gekennzeichnet, dass** die erste elastische Kraftspeichereinrichtung (44) über die Drehwelle (50) an der Kettenführungsbaugruppe (25) angekoppelt ist, um die Vorspannkraft über die Drehwelle auf die Kettenführungsbaugruppe auszuüben.

7. Hinterer Fahrradumwerfer nach Anspruch 6, **gekennzeichnet durch** eine Dämpfungseinrichtung (38), welche dafür konfiguriert ist, über die Drehwelle (50) eine Dämpfungskraft auf die Kettenführungsbaugruppe auszuüben und eine der Dämpfungskraft entsprechende Gegenkraft an einer in Bezug auf das bewegliche Element (16) stationären Abstützung (77) abzustützen, wobei die Dämpfungseinrichtung (38) eine Koppeleinrichtung (60; 111) umfasst, über die die Dämpfungseinrichtung an wenigstens einem von der Abstützung (77) und der Drehwelle (50) angekoppelt ist.

8. Hinterer Fahrradumwerfer nach Anspruch 7, **dadurch gekennzeichnet, dass** die Drehwelle (50) und die Dämpfungseinrichtung (38) in eine Baueinheit (83) integriert sind, die in die Aufnahme (17) des beweglichen Elements (16) aufnehmbar und am beweglichen Element befestigbar ist.

9. Hinterer Fahrradumwerfer nach Anspruch 8, **dadurch gekennzeichnet, dass** die Baueinheit (83) ein der Kettenführungsbaugruppe (25) axial eng benachbartes Deckelelement (19) aufweist, welches zusammen mit der sich durch eine Durchgangsöffnung des Deckelelements erstreckenden Drehwelle (50) die Aufnahme (17) verschließt und am beweglichen Element (16) befestigt ist.

10. Hinterer Fahrradumwerfer nach Anspruch 8 oder 9, **dadurch gekennzeichnet, dass** auch die erste elastische Kraftspeichereinrichtung (44) in die Baueinheit (83) integriert ist.

11. Hinterer Fahrradumwerfer nach einem der Ansprüche 7 bis 10, **dadurch gekennzeichnet, dass** ein/das die Aufnahme (17) verschließendes Deckelelement (19) eine Halterung für die Freilaufkupplung (60) der Dämpfungseinrichtung (38) aufweist, über die eine Gegenkraft zur über die Drehwelle auf die Kettenführungsbaugruppe (25) ausgeübten Dämpfungskraft am Deckelelement (19) abgestützt wird.

12. Hinterer Fahrradumwerfer nach einem der Ansprüche 6 bis 11, **dadurch gekennzeichnet, dass** die Drehwelle (50) mittels einer ersten Drehlagerung an dem beweglichen Element (16) drehbar gelagert ist, welche an einem die Aufnahme (17) in axialer Richtung begrenzenden, von der Kettenführungsbaugruppe (25) abgewandten Bereich des beweglichen Elements (16) vorgesehen ist, wobei die erste Drehlagerung einen in die Aufnahme vorstehenden Lagerzapfen (81) und eine den Lagerzapfen aufnehmende Lagerbuchse umfasst, und wobei die Drehwelle (50) vermittels der Lagerbuchse an dem Lagerzapfen (81) drehbar gelagert ist.

13. Hinterer Fahrradumwerfer nach einem der Ansprüche 6 bis 12, **dadurch gekennzeichnet, dass** die Drehwelle (50) mittels einer im Bereich der Durchgangsöffnung oder eng benachbart zu dieser vorgesehenen zweiten Drehlagerung drehbar an einem/dem die Aufnahme (17) verschließenden Deckelelement (19) gelagert ist.

14. Hinterer Fahrradumwerfer nach einem der Ansprüche 6 bis 13, **dadurch gekennzeichnet, dass** die erste elastische Kraftspeichereinrichtung (44) an einem ersten Koppelbereich (44a) mit einem/dem die Aufnahme (17) verschließenden Deckelelement (19) formschlüssig gekoppelt ist und an einem zweiten Koppelbereich (44b) mit einem von der Drehwelle (50) radial vorstehenden, an der Drehwelle drehfest angeordnetem Koppelglied (65) formschlüssig gekoppelt ist, um die Vorspannkraft über das Koppelglied auf die Drehwelle und damit auf die Kettenführungsbaugruppe (25) auszuüben.

15. Hinterer Fahrradumwerfer nach einem der Ansprüche 6 bis 14, **dadurch gekennzeichnet, dass** an der Drehwelle (50) angekoppelte oder ankoppelbare Reibflächen einer/der Dämpfungseinrichtung durch eine zweite elastische Kraftspeichereinrichtung (80) gegeneinander vorgespannt werden und dass von der zweiten elastischen Kraftspeichereinrichtung (80) in entgegengesetzte axiale Richtungen ausgeübte erste und zweite axiale Druckkräfte unter Herstellung eines geschlossenen Kraftflusses beide an der Drehwelle (50) abgestützt werden.

16. Hinterer Fahrradumwerfer nach Anspruch 15, **gekennzeichnet durch** ein Einstellelement (76), welches an einem Innengewinde mit einem Außengewinde an einem von der Kettenführungsbaugruppe (25) beabstandeten Endbereich (51b) der Drehwelle (50) in Gewindeeingriff steht und zur Einstellung einer axialen Vorspannkraft der zweiten elastischen Kraftspeichereinrichtung (80) dient.

17. Hinterer Fahrradumwerfer nach Anspruch 16, **dadurch gekennzeichnet, dass** das Einstellelement (76) einen Axialanschlag für ein/das Koppelglied (65) definiert, welches an einem Koppelbereich (44b) der ersten elastischen Kraftspeichereinrichtung (44) formschlüssig angekoppelt ist und daran mitwirkt, die Vorspannkraft der ersten elastischen Kraftspeichereinrichtung (44) über die Drehwelle auf die Kettenführungsbaugruppe (25) auszuüben.

18. Hinterer Fahrradumwerfer nach Anspruch 16, **dadurch gekennzeichnet, dass** eine Abstützanordnung, die eine von der zweiten elastischen Kraftspeichereinrichtung (80) ausgeübte axiale Druckkraft an der Drehwelle (50) abstützt und Reibflächen aufweist, ein/das Koppelglied (65) umfasst, welches an einem Koppelbereich der ersten elastischen Kraftspeichereinrichtung (44) formschlüssig angekoppelt ist und daran mitwirkt, die Vorspannkraft der ersten elastischen Kraftspeichereinrichtung (44) über die Drehwelle auf die Kettenführungsbaugruppe (25) auszuüben.

19. Hinterer Fahrradumwerfer, umfassend:
- ein Basiselement (12), welches an einem Fahrradrahmen (1) montierbar ist;
- ein eine Aufnahme (17) aufweisendes bewegliches Element (16), welches mit dem Basiselement (12) beweglich gekoppelt ist;
- eine im beweglichen Element (16) in der Aufnahme (17) um eine Drehachse (A) drehbar gelagerte Drehwelle (50);
- eine relativ zum beweglichen Element (16) um die Drehachse (A) drehbare Kettenführungsbaugruppe (25), welche an der Drehwelle drehfest angekoppelt ist; und
- eine erste elastische Kraftspeichereinrichtung (44), welche dafür konfiguriert ist, eine die Kettenführungsbaugruppe in eine erste Drehrichtung (S) relativ zu dem beweglichen Element (16) vorspannende Vorspannkraft auf die Kettenführungsbaugruppe auszuüben;
**dadurch gekennzeichnet, dass** die Drehwelle (50) mittels einer Drehlagerung an einem Deckelelement (19) drehbar gelagert ist, welches zusammen mit der sich durch eine Durchgangsöffnung des Deckelelements erstreckenden Drehwelle (50) die Aufnahme (17) des beweglichen Elements (16) verschließt und am beweglichen Element (16) befestigt ist.

20. Hinterer Fahrradumwerfer nach Anspruch 19, **dadurch gekennzeichnet, dass** die Drehwelle (50) mittels einer weiteren Drehlagerung an dem beweglichen Element (16) drehbar gelagert ist, welche an einem die Aufnahme (17) in axialer Richtung begrenzenden, von der Kettenführungsbaugruppe (25) abgewandten Bereich des beweglichen Elements (16) vorgesehen ist, wobei die weitere Drehlagerung einen in die Aufnahme vorstehenden Lagerzapfen (81) und eine den Lagerzapfen aufnehmende Lagerbuchse umfasst, und wobei die Drehwelle (50) vermittels der Lagerbuchse an dem Lagerzapfen (81) drehbar gelagert ist.

21. Hinterer Fahrradumwerfer nach Anspruch 19 oder 20, **gekennzeichnet durch** eine Dämpfungseinrichtung (38), welche dafür konfiguriert ist, über die Drehwelle (50) eine Dämpfungskraft auf die Kettenführungsbaugruppe auszuüben und eine der Dämpfungskraft entsprechende Gegenkraft an einer in Bezug auf das bewegliche Element (16) stationären Abstützung (77) abzustützen, wobei die Dämpfungseinrichtung (38) eine Koppeleinrichtung (60; 111) umfasst, über die die Dämpfungseinrichtung an wenigstens einem von der Abstützung (77) und der Drehwelle (50) angekoppelt ist.

22. Hinterer Fahrradumwerfer nach einem der Ansprüche 19 bis 21, **dadurch gekennzeichnet, dass** die erste elastische Kraftspeichereinrichtung (44) über die Drehwelle (50) an der Kettenführungsbaugruppe (25) angekoppelt ist, um die Vorspannkraft über die Drehwelle auf die Kettenführungsbaugruppe auszuüben.
